# EUROPÄISCHE PATENTSCHRIFT

(11) **EP 4 348 068 B1**
(45) Veröffentlichungstag und Bekanntmachung des Hinweises auf die Patenterteilung: **11.03.2026**
(21) Anmeldenummer: 22729679.5
(22) Anmeldetag: 19.05.2022
(51) Int. Cl.: F16M 13/02, H04M 1/04, F16B 47/00, F16B 5/06, F16M 11/04

(54) **VERBINDUNGSVORRICHTUNG MIT EINEM UNTERDRUCKELEMENT**
CONNECTING DEVICE COMPRISING A VACUUM ELEMENT
DISPOSITIF DE RACCORDEMENT COMPRENANT UN ÉLÉMENT DE VIDE

(30) Priorität: 03.06.2021 DE 202021103028 U
(43) Veröffentlichungstag der Anmeldung: 10.04.2024
(73) Patentinhaber: Fidlock GmbH, 30659 Hannover (DE)
(72) Erfinder: BLECKAT, Björn, 30419 Hannover (DE); BOTKUS, Breido, 30175 Hannover (DE)
(74) Vertreter: Maikowski & Ninnemann Patentanwälte Partnerschaft mbB
(86) Internationale Anmeldenummer: PCT/EP2022/063651
(87) Internationale Veröffentlichungsnummer: WO 2022/253586

(56) Entgegenhaltungen:
- WO-A1-2021/043482
- WO-A2-2019/086648
- DE-T5- 112010 005 966
- JP-U- S55 153 251
- US-B2- 11 021 111
- US-B2- 9 729 185

## Beschreibung

Die Erfindung betrifft eine Verbindungsvorrichtung zum lösbaren Verbinden zweier Baugruppen nach dem Oberbegriff des Anspruchs 1.

Eine derartige Verbindungsvorrichtung weist ein Verschlussmodul auf, das einer ersten der Baugruppen zugeordnet ist und eine Gehäusebaugruppe, ein an der Gehäusebaugruppe verstellbar angeordnetes Verstellelement und ein Unterdruckelement aufweist. Die Verbindungsvorrichtung umfasst zudem eine Ansetzbaugruppe, die einer zweiten der Baugruppen zugeordnet ist und ein Ansetzteil aufweist. Das Verschlussmodul und das Ansetzteil der Ansetzbaugruppe sind entlang einer Ansetzrichtung aneinander ansetzbar, sodass in einer verbundenen Stellung bei Belastung der ersten und zweiten der Baugruppen zueinander das Verschlussmodul aufgrund einer durch das Unterdruckelement bewirkten Unterdruckwirkung an der zweiten der Baugruppen gehalten ist. Das Verschlussmodul weist ein erstes Magnetelement und die Ansetzbaugruppe ein zweites Magnetelement auf, wobei das erste Magnetelement und das zweite Magnetelement sich in der verbundenen Stellung magnetisch anziehend gegenüberstehen. Das Verstellelement ist zum Aufheben der Unterdruckwirkung des Unterdruckelements zu der Gehäusebaugruppe bewegbar, um eine Strömungsöffnung in der Gehäusebaugruppe für einen Zustrom von Luft in einen Raum zwischen dem Unterdruckelement und der zweiten der Baugruppen freizugeben.

Eine derartige Verbindungsvorrichtung ist beispielsweise aus der WO 2021/043482 A1 bekannt.

Eine Verbindungsvorrichtung soll vorliegend insbesondere zum Befestigen eines elektronischen Geräts an einer zugeordneten Baugruppe dienen können. So kann die Verbindungsvorrichtung beispielsweise die Befestigung einer Kamera an einem Helm (beispielsweise einem Skihelm oder einem Fahrradhelm) oder auch die Befestigung eines Mobiltelefons oder eines anderen elektronischen Geräts in oder an einem Fahrzeug, z.B. an der Windschutzscheibe oder am Armaturenbrett eines Kraftfahrzeugs oder an einer Lenkerstange eines Fahrrads oder Motorrads, ermöglichen.

Wird eine Kamera an einem Helm, beispielsweise einem Skihelm oder einem Fahrradhelm, oder ein Mobiltelefon an einem Armaturenbrett eines Fahrzeugs oder am Lenker eines Fahrrads befestigt, so können bei Gebrauch impulsartige Stoßkräfte wirken, die aufgefangen und abgeleitet werden müssen und insbesondere nicht zu einem Lösen der Kamera oder des Mobiltelefons führen sollen. Eine Verbindungsvorrichtung zum Befestigen eines elektronischen Geräts, beispielsweise einer Kamera oder eines Mobiltelefons, soll daher insbesondere in der Lage sein, kurzzeitig wirkende, impulsartige Stoßkräfte aufzunehmen.

Zum Befestigen ganz unterschiedlicher Baugruppen aneinander, beispielsweise auch zum Befestigen eines elektronischen Geräts in Form eines Mobiltelefons oder Navigationsgeräts in einem Fahrzeug, sind Verbindungsvorrichtungen bekannt, die eine Halterung mittels Unterdruck bereitstellen. So ist aus der US 2013/0323388 A1 eine Verbindungsvorrichtung bekannt, die ein Unterdruckelement in Form eines Saugnapfes verwendet, um ein Mobiltelefon an der Windschutzscheibe eines Fahrzeugs festzulegen. Der Saugnapf wird hierzu an die Windschutzscheibe angesetzt, wobei an dem Saugnapf ein Magnetelement angeordnet ist, das mit einem magnetisch wirkenden Element auf Seiten der Windschutzscheibe zusammenwirken kann, um den Halt an der Windschutzscheibe zu verbessern.

Bei einer aus der US 5,192,043 bekannten Verbindungsvorrichtung zum Befestigen einer Alarmvorrichtung an einer Metallfläche wird eine magnetische Gummifläche an eine Metallfläche angesetzt, wobei bei Ansetzen ein Vakuum entsteht, sodass durch Magnetwirkung zwischen der Gummifläche und der Metallfläche sowie durch Unterdruckkräfte die Alarmvorrichtung an der Metallfläche gehalten wird.

Eine aus der EP 0 689 966 B1 bekannte Verbindungsvorrichtung weist eine magnetische Kontaktplatte auf, an der ein Saugnapf angeordnet ist. Mittels der Verbindungsvorrichtung kann ein Skiträger an einem Fahrzeugdach eines Fahrzeugs befestigt werden.

Aus der WO 2019/086648 A2 ist eine Verbindungsvorrichtung bekannt, bei der ein Verschlussmodul ein Unterdruckelement aufweist, das an eine zugeordnete Ansetzkomponente angesetzt werden kann, um in einer verbundenen Stellung durch Unterdruck mit der Ansetzkomponente zusammenzuwirken. Ein Verstellelement kann verstellt werden, um eine Strömungsöffnung freizugeben, um das Verschlussmodul von der Ansetzkomponente zu lösen.

Aufgabe der vorliegenden Erfindung ist es, eine Verbindungsvorrichtung zur Verfügung zu stellen, die einfach verwendbar und universell zum Verbinden unterschiedlicher Baugruppen einsetzbar ist.

Diese Aufgabe wird durch einen Gegenstand mit den Merkmalen des Anspruchs 1 gelöst.

Demnach ist das Ansetzteil der Ansetzbaugruppe zum Verkleben mit der zweiten der Baugruppen ausgebildet.

Bei der Verbindungsvorrichtung wird eine Verbindung zwischen den aneinander zu befestigenden Baugruppen dadurch hergestellt, dass das einer ersten der Baugruppen zugeordnete Verschlussmodul und die der anderen, zweiten der Baugruppen zugeordnete Ansetzbaugruppe entlang einer Ansetzrichtung aneinander angesetzt werden. Beim Ansetzen entsteht ein abgedichteter Raum zwischen dem Unterdruckelement und der zweiten der Baugruppen, an dem die Ansetzbaugruppe angeordnet ist, sodass die Baugruppen aufgrund einer Unterdruckwirkung aneinander gehalten sind. Solch eine Verbindung kann insbesondere belastbar auf Stoß sein, sodass über die Verbindungsvorrichtung Stoßkräfte aufgefangen und abgeleitet werden können.

Mittels der Verbindungsvorrichtung können beispielsweise eine Kamera an einem Helm oder ein Mobiltelefon in oder an einem Fahrzeug, zum Beispiel an einer Windschutzscheibe oder an einem Armaturenbrett eines Kraftfahrzeugs oder an einer Lenkerstange eines Fahrrads oder Motorrads, befestigt werden.

In der verbundenen Stellung der Verbindungsvorrichtung kann das Unterdruckelement zum Beispiel flächig an einer zugeordneten Anlagefläche anliegen, sodass effektiv kein Raum zwischen dem Unterdruckelement und der zweiten der Baugruppen besteht. Bei einer Belastung der Baugruppen relativ zueinander kann jedoch eine Kraft auf das Verschlussmodul relativ zu der Ansetzbaugruppe wirken, die in Richtung einer Vergrößerung oder Schaffung eines zwischen dem Unterdruckelement und der zweiten Baugruppe gebildeten Raums wirkt, was einen Unterdruck zwischen dem Unterdruckelement und der zweiten Baugruppe bewirkt und somit Haltekräfte erzeugt, die das Unterdruckelement an der zweiten Baugruppe halten und tendenziell größer werden, je stärker das Verschlussmodul gegenüber der Ansetzbaugruppe belastet wird. Das Verschlussmodul wird somit aufgrund Unterdruckwirkung an der Ansetzbaugruppe gehalten, wenn das Verschlussmodul an die Ansetzbaugruppe angesetzt ist.

Das Schließen der Verbindungsvorrichtung erfolgt somit dadurch, dass das Verschlussmodul an die Ansetzbaugruppe angesetzt wird. In verbundener Stellung herrscht - zusätzlich zu den durch die Magnetelemente bereitgestellten Magnetkräften - ein Unterdruck zwischen dem Verschlussmodul und der der Ansetzbaugruppe zugeordneten zweiten Baugruppe, sodass das Verschlussmodul aufgrund der Unterdruckwirkung stoßbelastbar an der zweiten Baugruppe gehalten ist.

Dadurch, dass das Ansetzteil mit der zweiten Baugruppe verklebt werden kann, ergibt sich eine besonders einfache Herstellung. So kann das Ansetzteil der Ansetzbaugruppe zunächst unabhängig von der zweiten Baugruppe hergestellt und ausgeliefert werden. Um die Verbindungsvorrichtung betriebsbereit zu machen, wird die Ansetzbaugruppe mit der zweiten Baugruppe, beispielsweise einem elektronischen Gerät in Form eines Mobiltelefons, verklebt und somit an der zweiten Baugruppe angebracht, sodass über das Verschlussmodul eine Verbindung mit der zweiten Baugruppe hergestellt werden kann.

Im Vergleich zu einer Integration der Ansetzbaugruppe beispielsweise in eine Hülle der zweiten Baugruppe, zum Beispiel dem elektronischen Gerät, ergibt sich eine einfache, kostengünstige Fertigung. Die Ansetzbaugruppe kann modular mit dem elektronischen Gerät, beispielsweise direkt an einem Mobiltelefon oder einer Hülle für das Mobiltelefon, angebracht werden, um auf diese Weise eine Halteeinrichtung für das elektronische Gerät zur Verfügung zu stellen.

Die Ansetzbaugruppe weist eine Klebeeinrichtung zum Herstellen einer Klebeverbindung mit der zweiten der Baugruppen auf.

Die Klebeeinrichtung kann beispielsweise durch eine Klebeschicht bestehend aus einem Klebstoff für polare oder unpolare Oberflächen gebildet sein. Bei polaren Oberflächen handelt es sich um Oberflächen aus Materialien, die eine hohe Oberflächenenergie aufweisen, zum Beispiel Stahl, Eisen, Aluminium oder PVC. Bei unpolaren Oberflächen handelt es sich um Oberflächen mit einer niedrigen Oberflächenenergie, beispielsweise aus Materialen wie PE, PP oder Silikon. Abhängig von der gewünschten Anbringung der Ansetzbaugruppe kann ein Klebstoff gewählt werden, der für polare Materialien geeignet ist, oder ein Klebstoff, der für unpolare Materialien geeignet ist.

Eine solche Klebeschicht kann beispielsweise durch einen flüssigen Klebstoff bereitgestellt werden, der zur Befestigung auf die Ansetzbaugruppe aufgebracht wird.

In anderer Ausgestaltung kann die Klebeeinrichtung durch ein Klebepad gebildet sein, das über eine erste Klebefläche mit dem Ansetzteil verklebt und über eine zweite Klebefläche mit der zweiten der Baugruppen verklebbar ist. Das Klebepad ist somit doppelseitig klebend. Über die erste Klebefläche ist das Klebepad mit dem Ansetzteil verklebt. Über die zweite Klebefläche kann das Klebepad mit der zweiten Baugruppe verklebt werden, um auf diese Weise das Ansetzteil an der zweiten Baugruppe festzulegen.

Das Klebepad kann beispielsweise die Form einer Membran aufweisen, die auf zwei Seiten klebend ist.

Die Klebeeinrichtung, zum Beispiel in Form des Klebepads, kann beispielsweise an einer einer Ansetzfläche abgewandten Seite des Ansetzteils angeordnet sein. An die Ansetzfläche wird das Verschlussmodul zum Schließen der Verbindungsvorrichtung mit der Gehäusebaugruppe angesetzt. An einer von dieser Ansetzfläche abgewandten Seite ist das Ansetzteil über die Klebeeinrichtung klebend mit der zweiten Baugruppe verbunden und somit an der zweiten Baugruppe festgelegt.

An der zweiten Seite des Ansetzteils kann beispielsweise eine Vertiefung geformt sein, in der das Klebepad aufgenommen ist, sodass das Ansetzteil enganliegend an der zweiten Baugruppe, beispielsweise einer Anlagefläche unmittelbar an einem elektronischen Gerät oder an einer Hülle eines elektronischen Geräts, zum Beispiel eines Mobiltelefons, angebracht werden kann.

Das zweite Magnetelement der Ansetzbaugruppe ist in einer Aufnahmeöffnung des Ansetzteils aufgenommen. Das zweite Magnetelement kann beispielsweise durch ein oder mehrere Permanentmagnete, zum Beispiel einen ringförmigen Permanentmagneten, gebildet sein, der in einer zugeordneten Aufnahmeöffnung des Ansetzteils aufgenommen ist. Die Klebeeinrichtung verschließt hierbei die Aufnahmeöffnung an der der Ansetzfläche abgewandten Seite, sodass der Magnet über die Klebeeinrichtung, zum Beispiel in Form eines membranartigen Klebepads, in dem Ansetzteil gekapselt ist.

In einer Ausgestaltung weist das Verstellelement einen ersten Formschlussabschnitt und die Ansetzbaugruppe einen zweiten Formschlussabschnitt auf. Bei Ansetzen des Verschlussmoduls und der Ansetzbaugruppe aneinander gelangen die Formschlussabschnitte formschlüssig miteinander in Eingriff derart, dass eine Querbewegung zwischen dem Verschlussmodul und der Ansetzbaugruppe gesperrt ist. Mittels der Formschlussabschnitte kann somit insbesondere eine Bewegung quer zu einer Ansetzrichtung, entlang derer das Verschlussmodul und die Ansetzbaugruppe aneinander ansetzbar sind, gesperrt werden, sodass in Querrichtung wirkende Kräfte (also in der Ebene der Ansetzfläche wirkende Kräfte) aufgenommen und abgestützt werden können.

Die Formschlussabschnitte können beispielsweise einerseits durch einen um die Ansetzrichtung umlaufenden Steg und andererseits durch eine komplementäre Nut geformt sein, die zum Herstellen der Verbindung miteinander in Eingriff gebracht werden können.

Zusätzlich oder alternativ kann das Verschlussmodul in seiner Drehstellung zu der Ansetzbaugruppe gesichert sein, sodass auch Torsionskräfte aufgenommen und abgestützt werden können. Hierzu kann das Verschlussmodul einen ersten Eingriffsabschnitt aufweisen, während die Ansetzbaugruppe einen zweiten Eingriffsabschnitt aufweist. Bei Ansetzen des Verschlussmoduls und der Ansetzbaugruppe aneinander gelangen die Eingriffsabschnitte sperrend miteinander in Eingriff und sperren auf diese Weise eine Verdrehbewegung des Unterdruckelements gegenüber der Ansetzbaugruppe.

Die Eingriffsabschnitte können beispielsweise durch eine (vorzugsweise an einem kreisförmigen Randabschnitt umlaufende) Verzahnung an dem Verschlussmodul einerseits und der Ansetzbaugruppe andererseits gebildet sein.

In einer Ausgestaltung weist einer der Eingriffsabschnitte eine Mehrzahl von Vertiefungen auf, während der andere der Eingriffsabschnitte zumindest ein Eingriffselement zum Eingreifen in die Vertiefungen aufweist.

Beispielsweise können Vertiefungen an dem Ansetzteil der Ansetzbaugruppe geformt sein, wobei die Vertiefungen zum Beispiel in die Ansetzfläche des Ansetzteils eingeformt sind. Ein oder mehrere Eingriffselemente können demgegenüber beispielsweise an dem Gehäuseteil des Verschlussmoduls geformt und als Vorsprungselemente ausgebildet sein, die dazu ausgestaltet sind, in die Vertiefungen des Ansetzteils einzugreifen, wenn das Verschlussmodul und die Ansetzbaugruppe miteinander verbunden sind.

In anderer Ausgestaltung können Vertiefungen aber auch an dem Verschlussmodul und zumindest ein Eingriffselement an der Ansetzbaugruppe geformt sein.

Durch den Eingriff wird eine Drehsicherung des Verschlussmoduls und der Ansetzbaugruppe zueinander in der verbundenen Stellung bereitgestellt, sodass das Verschlussmodul und die Ansetzbaugruppe gegen ein Verdrehen zueinander gesichert sind.

Das zumindest eine Eingriffselement kann beispielsweise als balliges Vorsprungselement geformt sein und dazu beispielsweise die Form einer Halbkugel aufweisen. Die Vertiefungen sind komplementär zu dem zumindest einen Eingriffselement geformt, sodass das zumindest eine Eingriffselement in den Vertiefungen aufgenommen werden kann, um auf diese Weise eine Drehsicherung des Verschlussmoduls zu der Ansetzbaugruppe bereitzustellen.

Durch die ballige Ausgestaltung wird erreicht, dass über die Eingriffsabschnitte zwar eine Drehsicherung in der verbundenen Stellung bereitgestellt wird. Bei Überwindung eines insbesondere durch die Unterdruckkraft und die magnetische Anziehungskraft bestimmten Drehmoments können das Verschlussmodul und die Ansetzbaugruppe jedoch zueinander verdreht werden, indem das zumindest eine Eingriffselement ratschend über die Vertiefungen gleitet.

Die Vertiefungen sind beispielsweise regelmäßig entlang einer Kreisline um die Ansetzrichtung aneinander angereiht. Ebenso können Eingriffselemente entlang einer radial gleichen Kreislinie an dem jeweils anderen Bauteil aneinander angereiht sein. Die Vertiefungen geben unterschiedliche, um die Ansetzrichtung zueinander winkelversetzte Stellungen vor, in denen das Verschlussmodul und die Ansetzbaugruppe aneinander angesetzt werden können. Das Verschlussmodul und die Ansetzbaugruppe können somit in diskreten Winkelstellungen miteinander verbunden werden, wobei der Abstand der Vertiefungen entlang der Kreislinie den Winkelversatz zwischen benachbarten Stellungen bestimmt.

Die Anzahl der Vertiefungen kann beispielsweise durch 4 teilbar sein. Hierdurch kann erreicht werden, dass das Verschlussmodul stets exakt in zueinander senkrechten Ausrichtungen, zum Beispiel einer vertikalen Ausrichtung und einer horizontalen Ausrichtung, mit der Ansetzbaugruppe verbunden werden kann. Dadurch, dass die Anzahl der Vertiefungen durch 4 teilbar ist, ergibt sich, dass stets zumindest zwei um exakt 90° zueinander winkelversetzte Stellungen des Verschlussmoduls relativ zu der Ansetzbaugruppe möglich sind.

Generell ist die Anzahl der Vertiefungen gleich oder größer als die Anzahl der Eingriffselemente. Beispielsweise kann, in einer Ausgestaltung, die Anzahl der Vertiefungen größer als die Anzahl der Eingriffselemente sein. So kann eine Mehrzahl von Vertiefungen vorhanden sein, die unterschiedliche, diskrete Winkelstellungen des Verschlussmoduls relativ zu der Ansetzbaugruppe vorgeben. Es kann aber ein einziges Eingriffselement an dem jeweils anderen Bauteil ausreichend sein, das bei Verbinden des Verschlussmoduls und der Ansetzbaugruppe miteinander in eine der Vertiefungen eingreift und dadurch eine Drehsicherung bereitstellt. In anderer Ausgestaltung können aber auch mehrere Eingriffselemente vorgesehen sein, um eine zuverlässige Drehsicherung bereitzustellen, die in der verbundenen Stellung in Vertiefungen des jeweils anderen Eingriffsabschnitts eingreifen.

In einer Ausgestaltung ist das Verstellelement um unterschiedliche Raumrichtungen zu der Gehäusebaugruppe verkippbar, um eine Strömungsöffnung in der Gehäusebaugruppe für einen Zustrom von Luft in den Raum zwischen dem Unterdruckelement und der zweiten der Baugruppen freizugeben. Das Verschlussmodul weist eine Strömungsöffnung auf, die durch Bewegen des Verstellelements relativ zum Unterdruckelement für einen Zustrom von Luft in einen zwischen dem Unterdruckelement und der zweiten Baugruppe vorhandenen Raum freigegeben werden kann. Dadurch, dass das Verstellelement um unterschiedliche Raumrichtungen und somit durch unterschiedliche Verstellbewegungen zu der Gehäusebaugruppe verstellbar ist, wird eine einfache, intuitive, komfortable Bedienung des Verstellelements durch einen Nutzer zum Lösen des Verschlussmoduls und der Ansetzbaugruppe voneinander ermöglicht.

Dadurch, dass das Verstellelement um unterschiedliche Raumrichtungen zu der Gehäusebaugruppe verkippbar ist, kann das Verstellelement unter Verwendung unterschiedlicher Kippbewegungen zu der Gehäusebaugruppe verstellt und somit zum Lösen des Verschlussmoduls von der Ansetzbaugruppe betätigt werden. Hierbei kann auch eine überlagerte Kippbewegung, die sich aus einem Verkippen um eine erste Kippachse und einem überlagerten Verkippen um eine zweite Kippachse zusammensetzt, zum Betätigen des Verstellelements verwendet werden, sodass ein Nutzer in ganz unterschiedlicher Weise auf das Verstellelement einwirken und dieses betätigen kann, um die Strömungsöffnung freizugeben und somit ein Lösen des Unterdruckelements von der Ansetzbaugruppe zu ermöglichen.

Beispielsweise kann das Verstellelement um beliebige Raumrichtungen innerhalb einer Ebene verkippbar sein. Das Verstellelement kann somit so an der Gehäusebaugruppe gelagert sein, dass ein Verkippen des Verstellelements relativ zu der Gehäusebaugruppe um ganz beliebige Kippachsen möglich ist, wobei ein oder mehrere Kippachsen durch eine mechanische Lagerung definiert sein können oder auch ein freies Verkippen ohne besondere, definierte Kippachse möglich sein kann.

Die Bedienung des Verstellelements kann vorzugsweise händisch durch einen Nutzer erfolgen, indem der Nutzer auf das Verstellelement einwirkt. Die Bedienung des Verstellelements kann hierbei beispielsweise mit den Fingerspitzen erfolgen, indem der Nutzer an dem Verstellelement drückt oder zieht und dadurch das Verstellelement bewegt.

Dadurch, dass das Verstellelement taumelnd um unterschiedliche Raumrichtungen verkippt werden kann, ist auch eine grobmotorische Betätigung, zum Beispiel unter Verwendung der Handfläche oder der Rückseite der Hand oder gegebenenfalls auch mit einem anderen Körperteil, zum Beispiel mit dem Fuß oder Ellenbogen, möglich. Weil das Verstellelement um unterschiedliche Raumrichtungen bewegt werden kann, kommt es auf eine exakte Ausführung einer bestimmten Bewegung nicht an, was ein einfaches, komfortables Betätigen der Verbindungsvorrichtung zum Öffnen ermöglicht.

Das Verstellelement kann hierbei mit einem vergleichsweise großen Hebel (radial zu einer entlang der Ansetzrichtung gerichteten zentralen Achse der Verbindungsvorrichtung) ausgeführt sein, sodass das Verstellelement leichtgängig bewegt werden kann.

Die unterschiedlichen Raumrichtungen können eine Ebene senkrecht zur Ansetzrichtung aufspannen. Die unterschiedlichen Raumrichtungen kann hierbei (gedachte) Kippachsen definieren, um die das Verstellelement nach Art einer taumelnden Bewegung verkippbar ist.

Das Verstellelement kann beispielsweise in der verbundenen Stellung der Verbindungsvorrichtung eine erste Stellung relativ zu dem Unterdruckelement einnehmen, in der die Strömungsöffnung verschlossen ist, sodass ein Zustrom von Luft in den Raum unterbunden ist. Aus dieser ersten Stellung kann das Verstellelement in eine zweite Stellung bewegt werden, um die Strömungsöffnung freizugeben und einen Zustrom von Luft zu ermöglichen. Eine Unterdruckwirkung zwischen dem Unterdruckelement und der zweiten Baugruppe besteht somit, aufgrund des Zustroms durch die Strömungsöffnung, nicht mehr, sodass das Verschlussmodul ohne Unterdruckwirkung von der Ansetzbaugruppe abgenommen werden kann.

In einer vorteilhaften Ausgestaltung ist das Verstellelement in Richtung seiner ersten Stellung vorgespannt. Die Vorspannung kann beispielsweise über ein Federelement erfolgen, das an dem Verstellelement wirkt. Die Vorspannung kann zum Beispiel aber auch über magnetische Elemente und somit magnetisch bewirkt sein. Das Verstellelement nimmt somit selbsttätig, wenn es nicht anderweitig betätigt ist, seine erste Stellung ein und verschließt somit, insbesondere in der verbundenen Stellung der Verbindungsvorrichtung, die Strömungsöffnung, sodass eine Unterdruckwirkung zwischen dem Unterdruckelement und der zweiten Baugruppe entstehen kann.

In einer Ausgestaltung ist das Unterdruckelement durch ein zumindest abschnittsweise elastisches Napfelement ausgebildet. In diesem Fall verwirklicht das Unterdruckelement somit ein Bauteil nach Art eines elastischen Saugnapfes, das an einer Anlagefläche der zweiten Baugruppe angeordnet werden kann, um unter elastischer Verformung ein Vakuum zwischen dem Unterdruckelement und der Anlagefläche zu bilden und dadurch Haltekräfte zum Halten der Baugruppen aneinander bereitzustellen.

In einer Ausgestaltung weist die Gehäusebaugruppe zumindest eine Lagerstelle zur Lagerung des Verstellelements auf. Das Verstellelement kann hierbei beispielsweise zumindest einen Lagerzapfen aufweisen, der in der zumindest einen Lagerstelle der Gehäusebaugruppe aufgenommen ist und somit das Verstellelement zu der Gehäusebaugruppe lagert. Die Lagerstelle ist dabei derart geformt, dass der Lagerzapfen sowohl um die erste Kippachse als auch um die zweite Kippachse in der Lagerstelle verkippbar ist, sodass eine überlagerte Kippbewegung des Verstellelements zu der Gehäusebaugruppe ermöglicht wird.

In einer Ausgestaltung weist das Verstellelement eine Mehrzahl von Lagerzapfen und die Gehäusebaugruppe eine Mehrzahl von Lagerstellen auf. Die Lagerzapfen sind in je einer zugeordneten Lagerstelle der Gehäusebaugruppe aufgenommen. Ein jeder Lagerzapfen ist in der zugeordneten Lagerstelle verkippbar und zudem entlang einer Betätigungsrichtung, entlang derer das Verstellelement an der Gehäusebaugruppe verstellbar ist, bewegbar. Durch eine solche Anordnung von Lagerstellen kann eine Verkippbarkeit des Verstellelements relativ zu der Gehäusebaugruppe um unterschiedliche Raumrichtungen ermöglicht werden, wobei das Verstellelement bei einem Verkippen zu der Gehäusebaugruppe an einer oder an mehreren der Lagerstellen abgestützt sein kann, sich die Abstützung aber in Abhängigkeit von der Kippbewegung unterscheidet. Die Lagerstellen können somit unterschiedliche Kippachsen vorgeben, um die ein Verkippen möglich ist, wobei ein Verkippen auch in überlagerter Weise um unterschiedliche Kippachsen möglich sein kann.

In einer Ausgestaltung sind die Lagerstellen entlang eines Kreises an der Gehäusebaugruppe aneinander angereiht. Der Kreis kann sich beispielsweise entlang der Ebene erstrecken, in der die Raumrichtungen, um die das Verstellelement der Gehäusebaugruppe verkippbar ist, erstreckt sind und die somit durch die Raumrichtungen aufgespannt ist. Die Lagerstellen können entlang des Kreises gleichverteilt angeordnet sein, sodass die Lagerstellen jeweils paarweise einen gleichen Abstand zueinander aufweisen. An einer jeden Lagerstelle kann der jeweils zugeordnete Lagerzapfen sich verkippen und zudem senkrecht zur Ebene des Kreises verstellen, sodass ein Verkippen des Verstellelements um unterschiedliche, in der Ebene des Kreises erstreckte Raumrichtungen relativ zu der Gehäusebaugruppe möglich ist.

Beispielsweise können an der Gehäusebaugruppe drei Lagerstellen geformt sein, die entlang des Kreises aneinander angereiht sind. An dem Verstellelement sind entsprechend drei Lagerzapfen geformt, die den Lagerstellen zugeordnet und an den Lagerstellen abgestützt sind.

In einer Ausgestaltung ist die Strömungsöffnung konzentrisch zu dem Kreis an der Gehäusebaugruppe angeordnet. Die Strömungsöffnung ist somit mittig relativ zu dem Kreis angeordnet, wobei die Strömungsöffnung zur Ebene des Kreises versetzt sein kann. Ein Ventilelement kann konzentrisch zum Kreis am Verstellelement angeordnet sein, das bei Verstellen des Verstellelements gemeinsam mit dem Verstellelement bewegt wird, um die Strömungsöffnung freizugeben und somit einen Zustrom von Luft in einen zwischen dem Unterdruckelement und der Ansetzbaugruppe vorhandenen Raum freizugeben.

Beispielsweise kann die zumindest eine Lagerstelle durch ein Langloch ausgebildet sein. Ein solches Langloch kann eine schwenkbare Lagerung um eine Kippachse bereitstellen und gleichzeitig ein Verkippen um die andere der Kippachsen durch Längsbewegung in dem Langloch ermöglichen. Alternativ kann die Lagerstelle beispielsweise nach Art einer Kugelkopflagerung ausgebildet sein. In diesem Fall kann der Lagerzapfen auf Seiten des Verstellelements beispielsweise ballig geformt sein. Eine zugeordnete Lagerstelle auf Seiten der Gehäusebaugruppe nimmt den Lagerzapfen auf und stützt diesen derart ab, dass der Lagerzapfen an der Lagerstelle verkippt und gleichzeitig senkrecht zu der Ebene, innerhalb derer die Lagerstellen an der Gehäusebaugruppe angeordnet sind, bewegt werden kann.

In einer Ausgestaltung ist die Strömungsöffnung in einem Boden der Gehäusebaugruppe gebildet, der in der verbundenen Stellung der Ansetzbaugruppe zugewandt ist. Der Boden kann beispielsweise an einem Gehäuseteil der Gehäusebaugruppe geformt sein, das fest mit dem Unterdruckelement verbunden ist. Der Boden kann hierbei zum Beispiel zentral innerhalb des Unterdruckelements angeordnet und vom Unterdruckelement umgeben sein, wobei der Boden in der verbundenen Stellung hin zu der Ansetzbaugruppe weist und in der verbundenen Stellung gegebenenfalls flächig mit der Ansetzbaugruppe in Anlage ist. In der verbundenen Stellung ist die in dem Boden geformte Strömungsöffnung durch das Verstellelement verschlossen, wobei durch Verstellen des Verstellelements die Strömungsöffnung freigegeben werden kann und somit Luft in einen zwischen dem Boden und der Ansetzbaugruppe vorhandenen Raum einströmen kann, um einen Unterdruck zwischen dem Verschlussmodul und der zweiten Baugruppe aufzuheben und somit das Verschlussmodul lösen zu können.

In einer Ausgestaltung weist das Verschlussmodul ein Ventilelement auf, das an dem Verstellelement angeordnet und durch Verstellen des Verstellelements betätigbar ist. Das Ventilelement kann beispielsweise aus einem weichelastischen Material, zum Beispiel einem Gummimaterial geformt sein und so an dem Verstellelement befestigt sein, dass das Ventilelement in der verbundenen Stellung die Strömungsöffnung am Boden des zugeordneten Gehäuseteils der Gehäusebaugruppe abdichtet, durch Verstellen des Verstellelements aber so bewegt werden kann, dass die Strömungsöffnung freigegeben wird.

Das erste Magnetelement und das zweite Magnetelement können jeweils durch einen Permanentmagneten oder auch eine Anordnung von mehreren Permanentmagneten gebildet sein und wirken zum Schließen der Verbindungsvorrichtung magnetisch anziehend zusammen, indem sie mit ungleichnamigen Magnetpolen aufeinander zu weisen. Denkbar ist aber auch, dass ein Magnetelement durch einen Permanentmagneten oder eine Anordnung von mehreren Permanentmagneten gebildet ist, während das andere Magnetelement durch einen magnetischen Anker aus einem ferromagnetischen Material gebildet ist.

Das Unterdruckelement liegt in der verbundenen Stellung an einer zugeordneten Anlagefläche an, die der zweiten der Baugruppen zugeordnet ist, sodass eine Unterdruckwirkung zwischen dem Verschlussmodul an der ersten der Baugruppen und der zweiten der Baugruppen besteht. In der verbundenen Stellung wirkt das Unterdruckelement zum Herstellen der Unterdruckwirkung mit der Anlagefläche zusammen und liegt flächig an der zugeordneten Anlagefläche an, sodass unter Verformung des beispielsweise durch einen elastischen Saugnapf ausgebildeten Unterdruckelements eine Unterdruckwirkung bereitgestellt wird und darüber die Baugruppen belastbar aneinander gehalten sind.

Eine Anlagefläche zum Zusammenwirken mit dem Unterdruckelement kann unmittelbar an der zweiten Baugruppe, zum Beispiel einem elektronischen Gerät oder einer Hülle eines elektronischen Geräts ausgebildet sein.

In einer Ausgestaltung kann die Anlagefläche aber auch an der Ansetzbaugruppe geformt sein. Bei dieser Ausgestaltung weist das Ansetzteil eine Anlagefläche auf, an der das Unterdruckelement in der verbundenen Stellung zum Bewirken der Unterdruckwirkung anliegt. Die Anlagefläche kann beispielsweise ringförmig ausgebildet sein und zum Beispiel einen radial inneren Eingriffsabschnitt des Ansetzteils umfänglich umgeben.

Dadurch, dass eine Anlagefläche an dem über eine Klebeverbindung mit der zugeordneten, zweiten Baugruppe verbundenen Ansetzteil gebildet ist, kann eine Unterdruckwirkung zwischen dem Unterdruckelement des Verschlussmoduls und dem Ansetzteil hergestellt werden. Dies ermöglicht insbesondere eine zuverlässige Unterdruckwirkung bei einer Baugruppe, die gegebenenfalls eine unregelmäßige äußere Oberfläche aufweist und daher keine dichtende Anlage mit dem Unterdruckelement gewährleistet. Dadurch, dass die Anlagefläche an dem Ansetzteil geformt ist, wird die Unterdruckwirkung somit unabhängig von der zweiten Baugruppe und einem dichtenden Abschluss zwischen dem Unterdruckelement und der zweiten Baugruppe.

In anderer Ausgestaltung kann die Anlagefläche aber auch unmittelbar an der zweiten Baugruppe, beispielsweise einem Gehäuse oder einer äußeren Hülle der zweiten Baugruppe geformt sein.

In einer Ausgestaltung weist ein elektronisches Gerät, insbesondere ein Mobiltelefon, eine Verbindungsvorrichtung nach der vorangehend beschriebenen Art auf. Das elektronische Gerät bildet hierbei die zweite der Baugruppen aus. Die Ansetzbaugruppe ist an dem elektronischen Gerät angebracht und dazu beispielsweise unmittelbar mit dem elektronischen Gerät verklebt oder mittelbar mit einer Hülle für das elektronische Gerät, zum Beispiel ein Mobiltelefon, verklebt, sodass das elektronische Gerät über die Hülle mit dem Verschlussmodul verbunden werden kann.

In einer Ausgestaltung liegt das Unterdruckelement in der verbundenen Stellung an einer von der Ansetzbaugruppe unterschiedlichen Anlagefläche des elektronischen Geräts zum Bewirken der Unterdruckwirkung an. Die Anlagefläche kann beispielsweise durch eine Gehäusefläche des elektronischen Geräts, zum Beispiel durch die Rückseite eines Mobiltelefons, gebildet sein. Die Anlagefläche kann aber auch durch eine Fläche einer Hülle des elektronischen Geräts, zum Beispiel der Hülle eines Mobiltelefons, gebildet sein. In der verbundenen Stellung wirkt das Unterdruckelement zum Herstellen der Unterdruckwirkung mit dem elektronischen Gerät zusammen und liegt flächig an der zugeordneten Anlagefläche an, sodass unter Verformung des beispielsweise durch einen elastischen Saugnapf ausgebildeten Unterdruckelements eine Unterdruckwirkung bereitgestellt wird und darüber das elektronische Gerät auf Stoß belastbar an dem Verschlussmodul gehalten wird.

Dies ist besonders vorteilhaft, weil in diesem Fall die durch das Unterdruckelement bereitgestellte Unterdruckraft nicht von der Klebeverbindung der ansetzbaugruppe abhängt, sondern von der Ansetzbaugruppe (weitestgehend) unabhängig ist und zumindest überwiegend zwischen dem Unterdruckelement und der Anlagefläche unmittelbar an am elektronischen Gerät wirkt.

Der der Erfindung zugrunde liegende Gedanke soll nachfolgend anhand der in den Figuren dargestellten Ausführungsbeispiele näher erläutert werden. Es zeigen:
- Fig. 1: eine Ansicht eines Ausführungsbeispiels eine Verbindungsvorrichtung, aufweisend ein Verschlussmodul und eine klebend mit einer zugeordneten Baugruppe zu verbindenden Ansatzbaugruppe;
- Fig. 2: eine Ansicht eines Ausführungsbeispiels einer Verbindungsvorrichtung, mit einer an einer Hülle eines Mobiltelefons anzubringenden Ansetzbaugruppe;
- Fig. 3: eine Ansicht eines Ausführungsbeispiels einer Verbindungsvorrichtung, mit einer unmittelbar an einem Mobiltelefon anzubringenden Ansetzbaugruppe;
- Fig. 4: eine Ansicht des Ausführungsbeispiels nach Fig. 3, in einer verbundenen Stellung des Verschlussmoduls der Verbindungsvorrichtung;
- Fig. 5A: eine Draufsicht auf die Anordnung gemäß Fig. 4;
- Fig. 5B: eine Schnittansicht entlang der Linie A-A gemäß Fig. 5A;
- Fig. 6: eine Explosionsansicht eines Ausführungsbeispiels einer Verbindungsvorrichtung;
- Fig. 7: eine Seitenansicht der Verbindungsvorrichtung zusammen mit einer zugeordneten Baugruppe;
- Fig. 8: eine Ansicht eines Verstellelements eines Verschlussmoduls der Verbindungsvorrichtung;
- Fig. 9A: eine Seitenansicht des Verstellelements;
- Fig. 9B: eine Schnittansicht entlang der Linie B-B gemäß Fig. 9A;
- Fig. 10: eine Draufsicht auf das an einer Gehäusebaugruppe angeordnete Verstellelement des Verschlussmoduls;
- Fig. 11A: eine perspektivische Ansicht des Verstellelements an der Gehäusebaugruppe;
- Fig. 11B: eine vergrößerte Ansicht im Ausschnitt B gemäß Fig. 11A;
- Fig. 12A: eine Draufsicht auf die Verbindungsvorrichtung;
- Fig. 12B: eine Schnittansicht entlang der Linie A-A gemäß Fig. 12A;
- Fig. 12C: eine vergrößerte Ansicht im Ausschnitt C gemäß Fig. 12B;
- Fig. 13A: eine Ansicht des Verstellelements bei einer Betätigung entlang einer ersten Betätigungsrichtung;
- Fig. 13B: eine Schnittansicht entlang der Linie C-C gemäß Fig. 13A;
- Fig. 14A: eine Ansicht des Verstellelements bei einer Betätigung entlang einer zweiten Betätigungsrichtung;
- Fig. 14B: eine Schnittansicht entlang der Linie C-C gemäß Fig. 14A;
- Fig. 15A: eine Ansicht des Verstellelements bei einer Betätigung entlang einer dritten Betätigungsrichtung;
- Fig. 15B: eine Schnittansicht entlang der Linie C-C gemäß Fig. 15A;
- Fig. 16: eine Ansicht des Verstellelements an der Gehäusebaugruppe, darstellend die Anordnung von Lagerstellen der Gehäusebaugruppe entlang eines Kreises;
- Fig. 17: die Schnittansicht gemäß Fig. 12B, darstellend die Verkippbarkeit des Verstellelements relativ zu der Gehäusebaugruppe entlang unterschiedlicher Betätigungsrichtungen;
- Fig. 18: eine vergrößerte Ansicht des mit der Ansetzbaugruppe verbundenen Verschlussmoduls, nach dem Ausführungsbeispiel gemäß Fig. 5B;
- Fig. 19: eine vergrößerte Ansicht der Ansetzbaugruppe;
- Fig. 20: eine Ansicht eines Ausführungsbeispiels eines Verschlussmoduls, mit einem an einem Boden eines Gehäuseteils geformten Eingriffsabschnitt mit einer Mehrzahl von balligen Eingriffselementen;
- Fig. 21: eine dem Verschlussmodul nach Fig. 20 zugeordnete Ansetzbaugruppe mit einem Eingriffsabschnitt aufweisend eine Mehrzahl von zu den Eingriffselementen komplementären Vertiefungen;
- Fig. 22: eine Ansicht eines anderen Ausführungsbeispiels eines Ansetzteils einer Ansetzbaugruppe; und
- Fig. 23: die Schnittansicht gemäß Fig. 18, bei Verwendung des Ansetzteils gemäß Fig. 22.

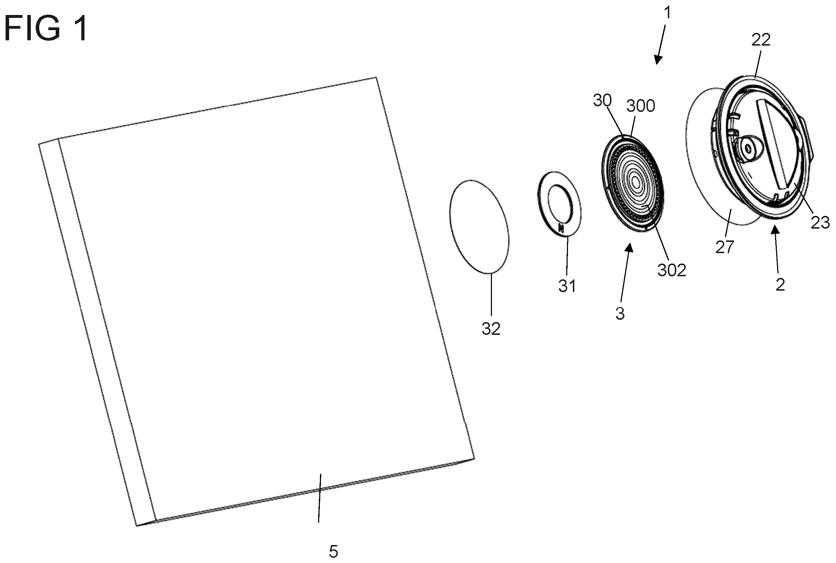

Eine Verbindungsvorrichtung 1, wie sie in einem Ausführungsbeispiel in Fig. 1 dargestellt ist, weist ein Verschlussmodul 2 mit einer Gehäusebaugruppe und einem an der Gehäusebaugruppe angeordneten Unterdruckelement 27 auf, das mit einer an einer Baugruppe 5 angeordneten Ansetzbaugruppe 3 verbunden werden kann. Das Verschlussmodul 2 ist einer weiteren Baugruppe zugeordnet, beispielsweise einem Fahrzeug, sodass durch Ansetzen des Verschlussmoduls 2 und der Ansetzbaugruppe 3 aneinander eine Verbindung zwischen der der Ansetzbaugruppe 3 zugeordneten Baugruppe 5 und der dem Verschlussmodul 2 zugeordneten Baugruppe hergestellt werden kann.

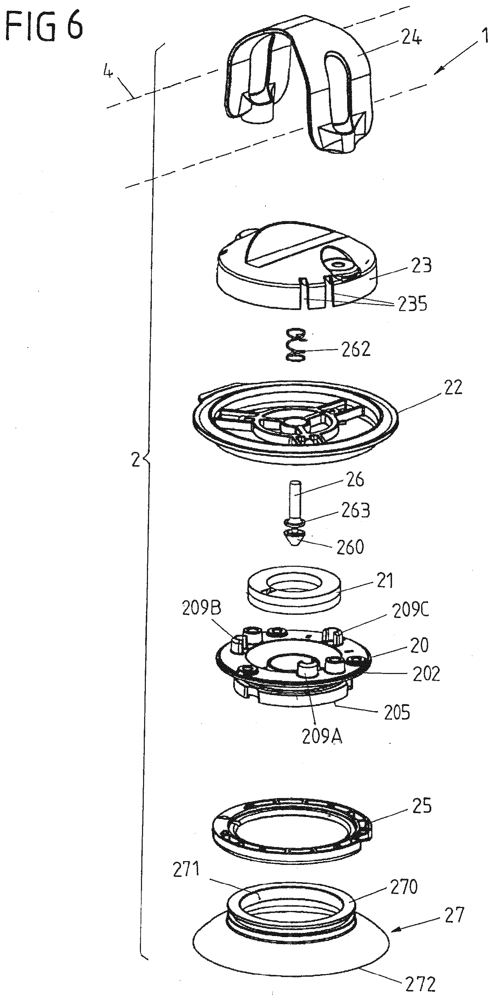

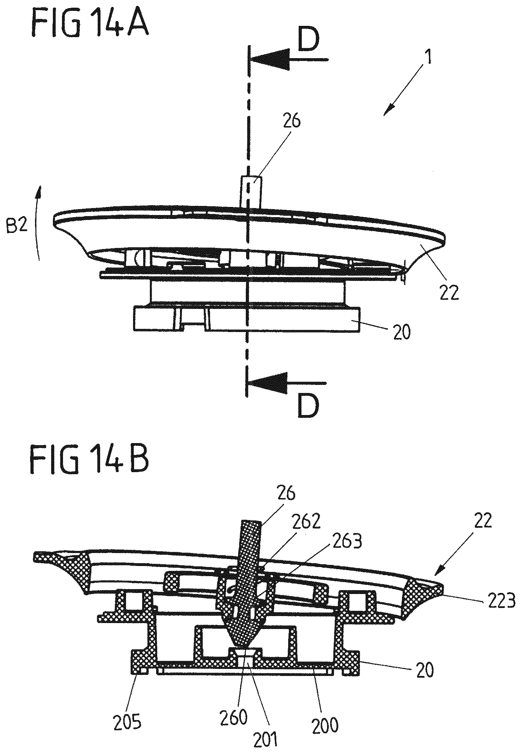

In verbundener Stellung sind das Verschlussmodul 2 und die Baugruppe 5 zum einen magnetisch und zum zweiten durch Unterdruckwirkung, bewirkt durch das Unterdruckelement 27, aneinandergehalten, wie dies nachstehend anhand der Ansichten gemäß Fig. 6 bis 17 noch im Einzelnen erläutert werden soll. Durch Betätigen eines Verstellelements 22 kann die durch das Unterdruckelement 27 in verbundener Stellung bewirkte Unterdruckwirkung aufgehoben werden, sodass das Verschlussmodul 2 und die Ansetzbaugruppe 3 voneinander abgenommen und somit die Verbindungsvorrichtung 1 gelöst werden kann.

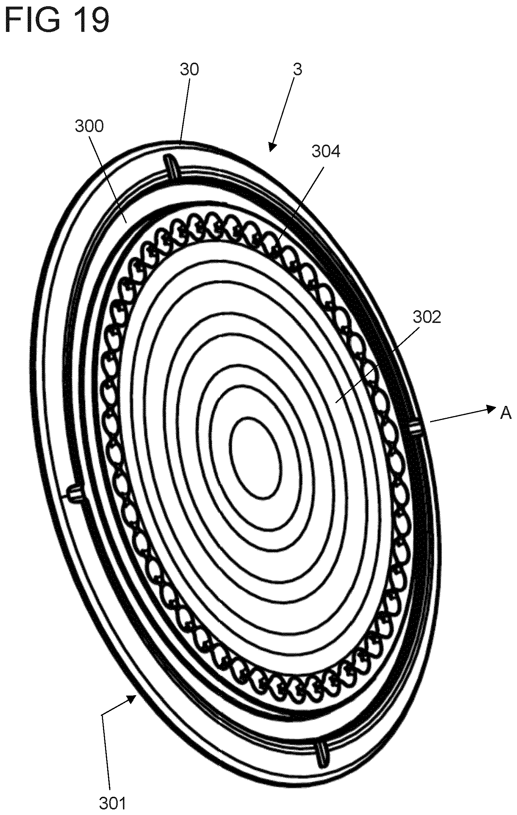

Bei dem dargestellten Ausführungsbeispiel weist die Ansetzbaugruppe 3 ein Ansetzteil 30 auf, wie dies in einer vergrößerten Ansicht auch in Fig. 19 dargestellt ist. Das Ansetzteil 30 bildet eine Ansetzfläche 302 aus, die mit dem Verschlussmodul 2 in Anlage gebracht werden kann. Rückseitig der Ansetzfläche 302 bildet das Ansetzteil 30 eine Aufnahmeöffnung aus, in der ein ringförmiges Magnetelement 31 in Form eines Permanentmagneten aufgenommen ist.

Die Ansetzbaugruppe 3 ist der Baugruppe 5 zugeordnet und in betriebsgemäßem Zustand an der Baugruppe 5 festgelegt. Die Ansetzbaugruppe 3 wird hierzu mit der Baugruppe 5 verklebt, sodass die Ansetzbaugruppe 3 zunächst getrennt von der Baugruppe 5 gefertigt und ausgeliefert werden kann, um die Ansetzbaugruppe 3 dann unter Herstellung einer Klebeverbindung an der Baugruppe 5 festzulegen.

Die Klebeverbindung kann beispielsweise durch eine Klebeschicht zwischen der Ansetzbaugruppe 3 und der Baugruppe 5 hergestellt werden. Zum Herstellen einer solchen Klebeschicht kann beispielsweise ein Kleber für polare Oberflächen oder ein Kleber für unpolare Oberflächen verwendet werden, abhängig vom Material insbesondere der Baugruppe 5, dem der Klebstoff angepasst sein kann.

In einer Ausgestaltung wird zur klebenden Verbindung der Ansetzbaugruppe 3 mit der Baugruppe 5 eine Klebeeinrichtung 32 in Form eines Klebepads verwendet, das zum Beispiel durch eine zweiseitig klebende Membran ausgestaltet sein kann. Mit einer ersten Klebefläche auf einer der Ansetzbaugruppe 3 zugewandten Seite kann das Klebepad 32 mit dem Ansetzteil 30 der Ansetzbaugruppe 3 klebend verbunden sein. Mit einer zweiten Klebefläche an einer der Baugruppe 5 zugewandten Seiten kann demgegenüber eine Klebeverbindung mit der Baugruppe 5 hergestellt werden.

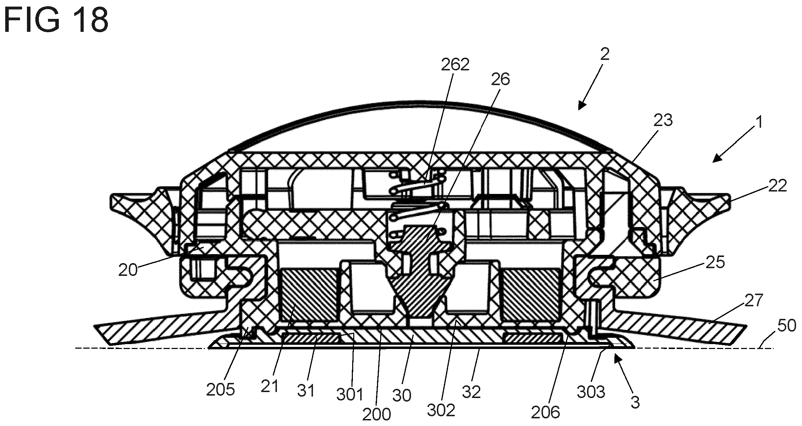

Bezugnehmend nunmehr auf Fig. 18, ist die Klebeeinrichtung 32 in Form des Klebepads zum Beispiel in einer Vertiefung 303 rückseitig des Ansetzteils 30 aufgenommen. Das Klebepad 32 kann hierbei das Magnetelement 32 in einer zugeordneten Aufnahmeöffnung 301 des Ansetzteils 30 kapseln, indem das Klebepad 32 das Magnetelement 31 an einer dem Verschlussmodul 2 abgewandten Seite überdeckt und dadurch die Aufnahmeöffnung 301 nach außen hin verschließt.

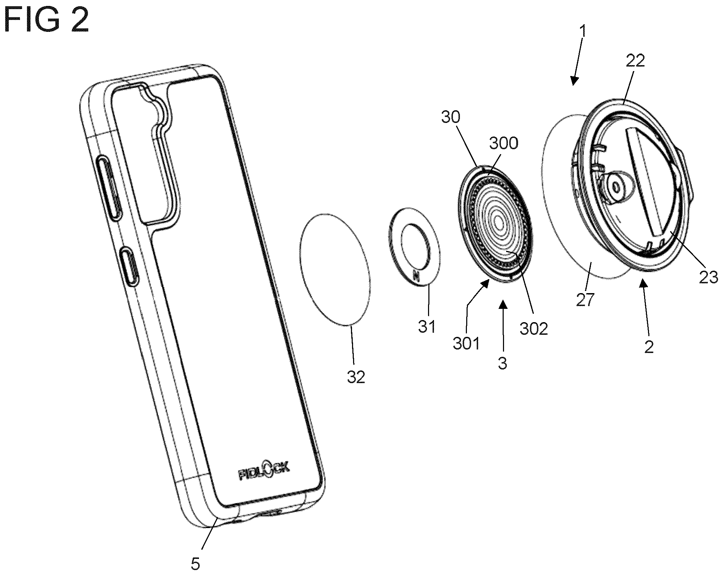

Bei einem in Fig. 2 dargestellten Ausführungsbeispiel ist die Baugruppe 5 durch eine Hülle eines Mobiltelefons ausgestaltet, sodass die Ansetzbaugruppe 3 über die Klebeeinrichtung 32, insbesondere in Form eines Klebepads, an einem elektronischen Gerät in Form eines Mobiltelefons angebracht werden kann, um auf diese Weise das Mobiltelefon über das Verschlussmodul 2 an einer anderen Baugruppe, zum Beispiel in oder an einem Fahrzeug, zu halten.

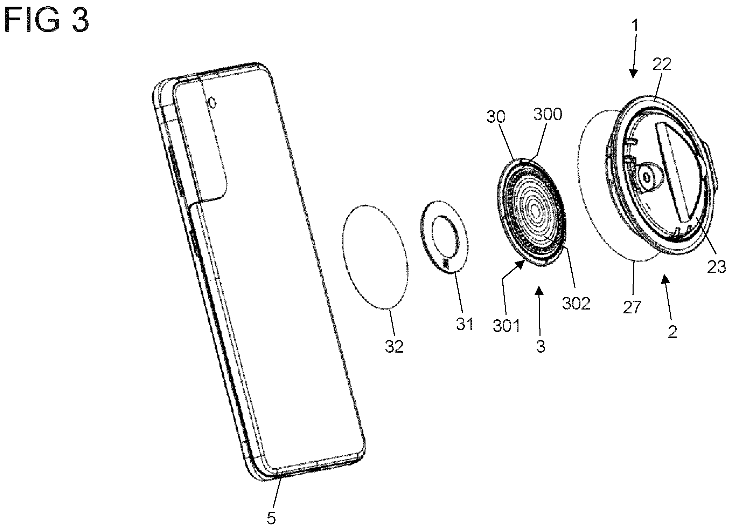

Bei einem wiederum anderen, in Fig. 3 dargestellten Ausführungsbeispiel wird die Ansetzbaugruppe 3 über eine Klebereinrichtung 32 unmittelbar an einem elektronischen Gerät in Form eines Mobiltelefons festgelegt.

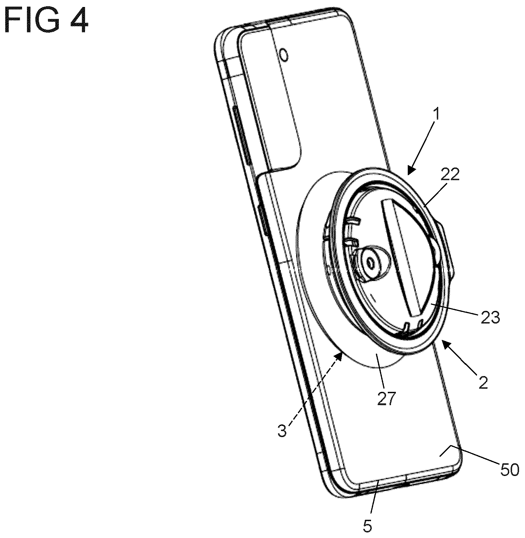

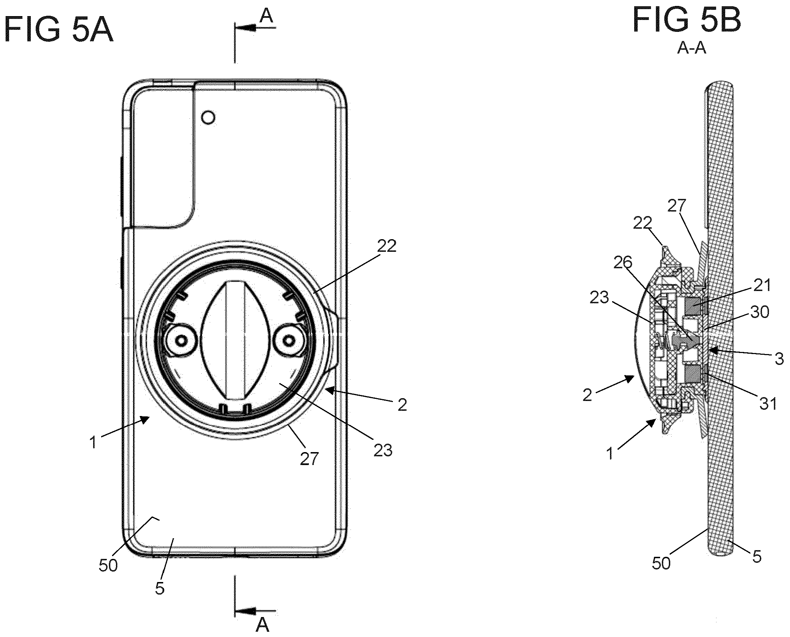

Fig. 4 und 5A, 5B zeigen die Verbindungsvorrichtung 1 mit dem Verschlussmodul 2 in einer verbundenen Stellung an der Ansetzbaugruppe 3 und der der Ansetzbaugruppe 3 zugeordneten Baugruppe 5 (bei dem dargestellten Ausführungsbeispiel das Mobiltelefon nach Fig. 3).

Wie dies der Schnittansicht gemäß Fig. 5B zu entnehmen ist, liegt in der verbundenen Stellung das Unterdruckelement 27 an einer Anlagefläche 50 des elektronischen Geräts an und ist dabei elastisch verformt, sodass eine Unterdruckwirkung zwischen dem Unterdruckelement 27 und der Anlagefläche 50 des elektronischen Geräts 5 besteht. Das Verschlussmodul 2 und die Ansetzbaugruppe 3 sind aneinander angesetzt und somit zueinander positioniert.

Bezugnehmend nunmehr auf Fig. 6 bis 17 soll die Funktionsweise der Verbindungsvorrichtung 1 erläutert werden.

Das Verschlussmodul 2 weist eine Gehäusebaugruppe auf, die durch Gehäuseteile 20, 23 gebildet ist, die fest miteinander verbunden, zum Beispiel verschraubt sind. An der Gehäusebaugruppe ist das Verstellelement 22 gelagert, das teilweise zwischen den Gehäuseteilen 20, 23 eingefasst und dazu mit Stegen 226 durch Ausnehmungen 235 in dem Gehäuseteil 23 hindurch erstreckt ist und zudem an Lagerstellen 209A-209C am Gehäuseteil 20 abgestützt ist.

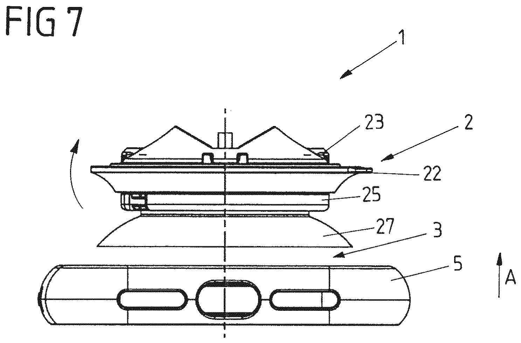

Über einen Befestigungsring 25 in Form eines Spannrings ist das Unterdruckelement 27 mit dem Gehäuseteil 20 verbunden. Das Unterdruckelement 27 kann mit einem flexiblen Randabschnitt 272 an die Baugruppe 5 angesetzt werden und ist in angesetzter Stellung unter Unterdruckwirkung an der Baugruppe 5 gehalten. Über einen Bund 270 ist das Unterdruckelement 27 mit dem Gehäuseteil 20 durch spannende Wirkung des Befestigungsrings 25 fest verbunden, wobei das Gehäuseteil 20 in einer Öffnung 271 des Unterdruckelements 27 einliegt und mit einem Boden 200 der Ansetzbaugruppe 3 zugewandt ist, wenn das Verschlussmodul 2 und die Ansetzbaugruppe 3 aneinander angesetzt werden, wie sich dies zum Beispiel aus Fig. 7 ergibt.

An dem Verstellelement 22 ist ein Ventilelement 26 angeordnet, das mit einem Ventilkopf 260 hin zum Boden 200 des Gehäuseteils 20 weist und in einer nicht betätigten Stellung des Verstellelements 22 eine Strömungsöffnung 201 in dem Boden 200 verschließt, sodass Luft nicht in einen Raum zwischen dem Unterdruckelement 27 und der Ansetzbaugruppe 3 eindringen kann, wenn das Verschlussmodul 2 an die Ansetzbaugruppe 3 angesetzt ist, analog wie dies vorangehend beschrieben worden ist.

Das Ventilelement 26 liegt in einer zentralen Aufnahmeöffnung 222 am Verstellelement 22 ein und ist über einen Kopplungsabschnitt 263 so mit dem Verstellelement 22 gekoppelt, dass das Ventilelement 26 bei einem Verstellen des Verstellelements 22 zusammen mit dem Verstellelement 22 bewegt und dadurch aus seinem verschließenden Eingriff mit der Strömungsöffnung 201 gebracht wird. Durch Verstellen des Verstellelements 22 kann die Strömungsöffnung 201 im Boden 200 des Gehäuseteils 20 somit freigegeben werden, sodass die Unterdruckwirkung zwischen dem Verschlussmodul 2 und der Ansetzbaugruppe 3 zum Lösen der Ansetzbaugruppe 3 von dem Verschlussmodul 2 aufgehoben werden kann.

Über ein Federelement 262 ist das Ventilelement 26 gegenüber dem Gehäuseteil 23 federelastisch abgestützt. Das Federelemente 262 spannt das Ventilelement 26 somit in Richtung des Verstellelements 22 vor, wobei ein Verstellen des Verstellelements 22 auch entgegen der federelastischen Wirkung des Federelements 262 erfolgt und das Verstellelement 22 nach einer Betätigung aufgrund der Federwirkung in die nicht betätigte Stellung, entsprechend der Stellung gemäß Fig. 7, zurückgestellt wird.

In einem Aufnahmeraum 203 an dem Gehäuseteil 20 ist ein Magnetelement 21 in Form eines ringförmigen Permanentmagneten aufgenommen. Zudem weist auch die Ansetzbaugruppe 3 ein Magnetelement 31 in Form eines ringförmigen Permanentmagneten auf. Die Magnetelemente 21, 31 wirken beim Ansetzen des Verschlussmoduls 2 und der Ansetzbaugruppe 3 aneinander magnetisch anziehend zusammen, um das Unterdruckelement 27 zu verformen und dadurch einen Unterdruck zwischen dem Unterdruckelement 27 und der Baugruppe 5 zu bewirken und zudem das Verschlussmodul 2 und die Ansetzbaugruppe 3 in verbundener Stellung magnetisch aneinander zu halten.

Über einen Befestigungsbügel 24, der fest mit dem Gehäuseteil 23 der Gehäusebaugruppe verbunden werden kann, kann das Verschlussmodul 2 an einer zugeordneten Baugruppe 4, zum Beispiel einem Fahrradlenker, befestigt werden.

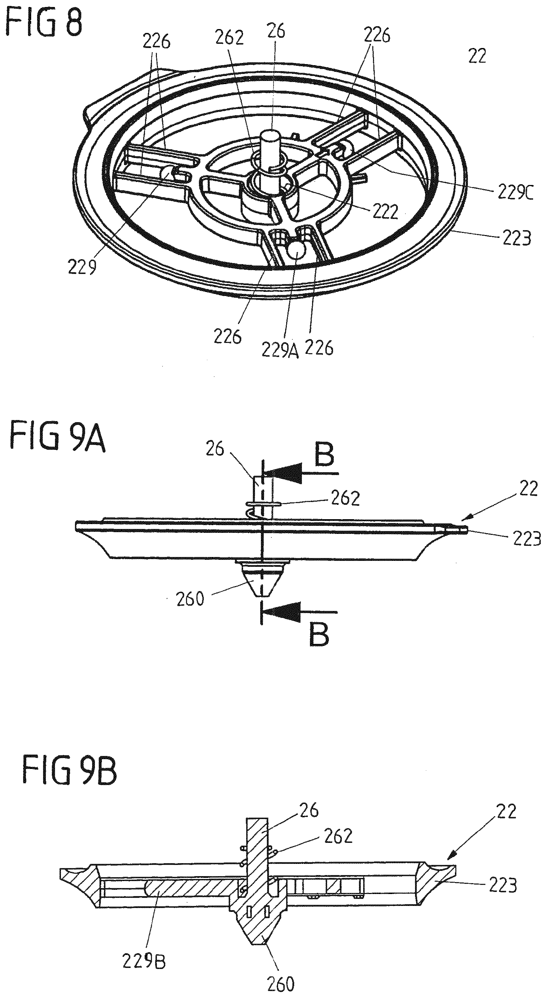

Bei dem Ausführungsbeispiel gemäß Fig. 6 bis 17 erfolgt die Lagerung des Verstellelements 22 an der Gehäusebaugruppe durch Lagerzapfen 229A, 229B, 229C, die an ihren radial äußeren Enden ballig geformt und jeweils zwischen zwei radial erstreckten Stegen 226 des Verstellelements 22 angeordnet sind, wie dies zum Beispiel aus Fig. 8 ersichtlich ist. Ein jeder Lagerzapfen 229A, 229B, 229C ist an einer zugeordneten Lagerstelle 209A, 209B, 209C des Gehäuseteils 20 abgestützt derart, dass ein jeder Lagerzapfen 229A, 229B, 229C sowohl an der zugeordneten Lagerstelle 209A, 209B, 209C verkippbar als auch längs entlang einer senkrecht zur Ebene des Gehäuseteils 20 gerichteten Verstellrichtung verschiebbar ist.

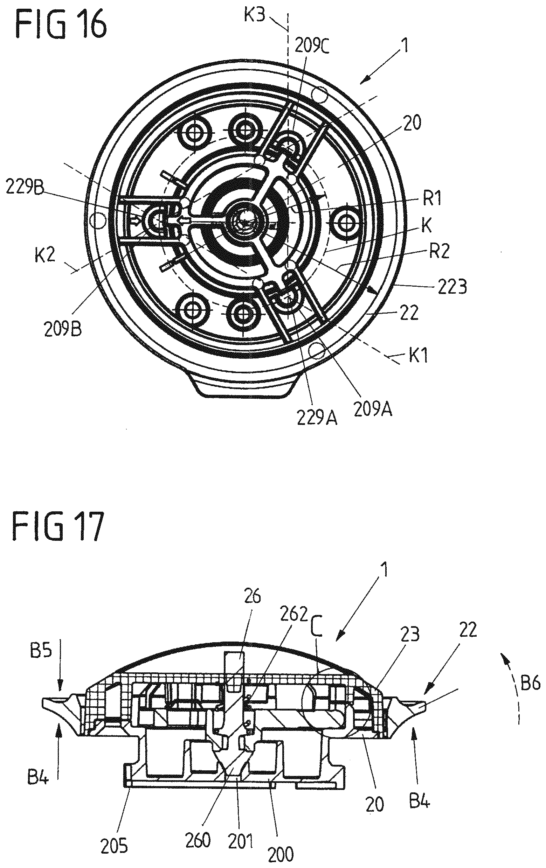

Wie dies schematisch in Fig. 16 eingezeichnet ist, sind die Lagerstellen 209A, 209B, 209C entlang eines Kreises K aneinander angereiht und dabei gleichverteilt entlang des Kreises K zueinander angeordnet. Die Lagerzapfen 229A, 229B, 229C greifen in die Lagerstellen 209A, 209B, 209C, die nach Art von senkrecht zu der Ebene des Kreises K erstreckten Halbschalen geformt sind, ein derart, dass die balligen Lagerzapfen 229A, 229B, 229C an den Lagerstellen 209A, 209B, 209C verkippbar und zudem senkrecht zur Ebene des Kreises K an den Lagerstellen 209A, 209B, 209C verschiebbar sind.

Hierdurch wird erreicht, dass das Verstellelement 22 um ganz beliebige Kippachsen K1, K2, K3 zu dem Gehäuseteil 20 verkippbar ist, nämlich um beliebige Kippachsen innerhalb der Ebene des Kreises K.

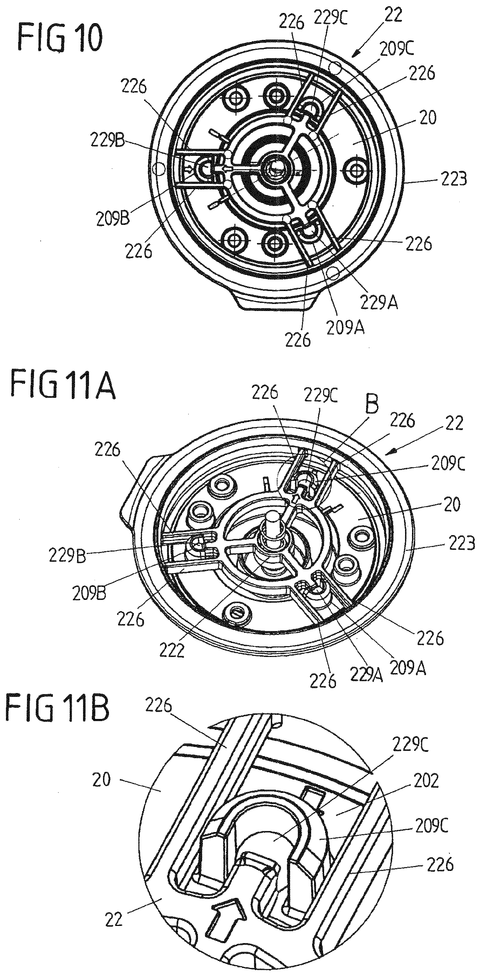

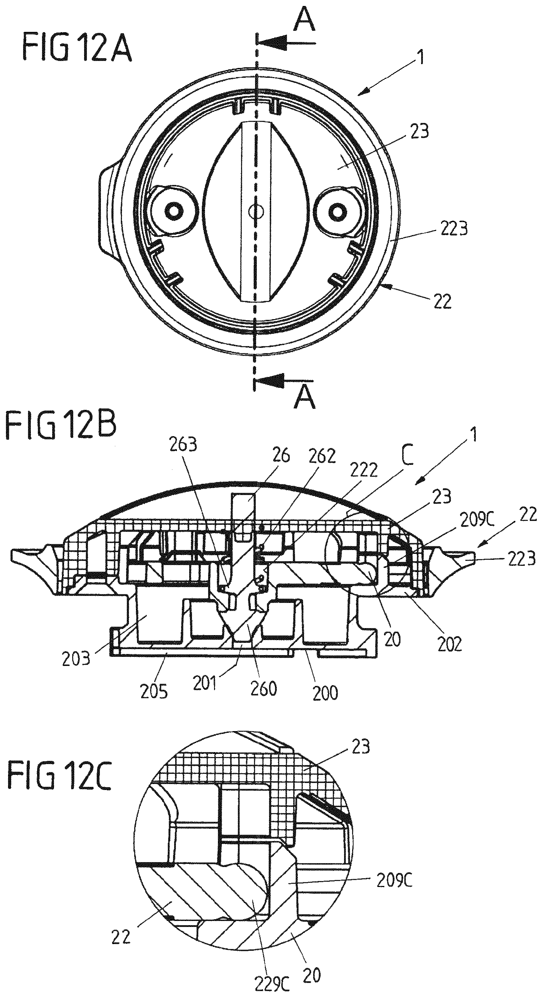

Wie dies aus Fig. 10 und Fig. 11A, 11B in Zusammenschau mit Fig. 12A bis 12C ersichtlich ist, liegen die Lagerzapfen 229A, 229B, 229C in einer nicht betätigten Stellung des Verstellelements 22 so in den Lagerstellen 209A, 209B, 209C ein, dass die Lagerzapfen 229A, 229B, 229C an einer dem Unterdruckelement 27 abgewandten Seite des Flansches 202 des Gehäuseteils 20 anliegen und darüber senkrecht zur Ebene des Kreises K an dem Gehäuseteil 20 abgestützt sind (siehe insbesondere die vergrößerte Ansicht gemäß Fig. 12C). In dieser nicht betätigten Stellung verschließt das Ventilelement 26 die Strömungsöffnung 201 im Boden 200 des Gehäuseteils 20, sodass bei mit der Ansetzbaugruppe 3 verbundenem Verschlussmodul 2 eine Unterdruckwirkung zwischen der Ansetzbaugruppe 3 und dem Verschlussmodul 2 besteht.

Das Verstellelement 22 kann über einen Betätigungsabschnitt 223 betätigt werden, der sich umfänglich an dem Verstellelement 22 erstreckt und ringförmig geschlossen ist. Der Betätigungsabschnitt 223 ist hierbei radial außerhalb des Kreises K angeordnet, wie dies aus Fig. 16 ersichtlich ist, indem der Betätigungsabschnitt 223 einen Radius R2 aufweist, der größer als der Radius R1 des Kreises K ist.

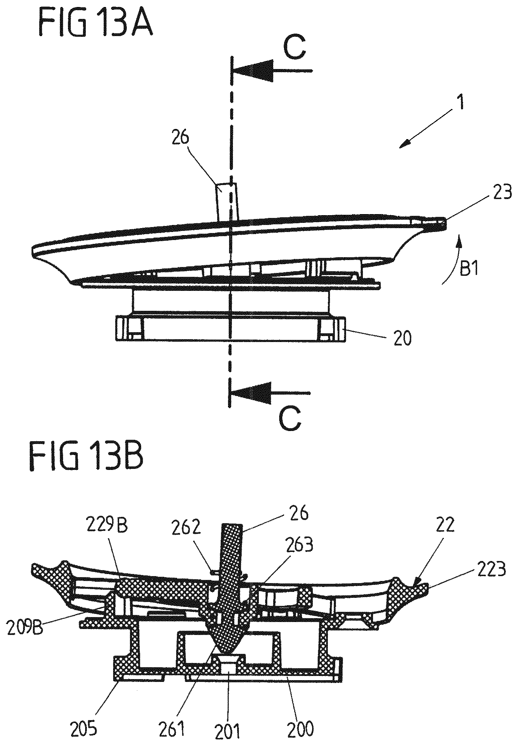

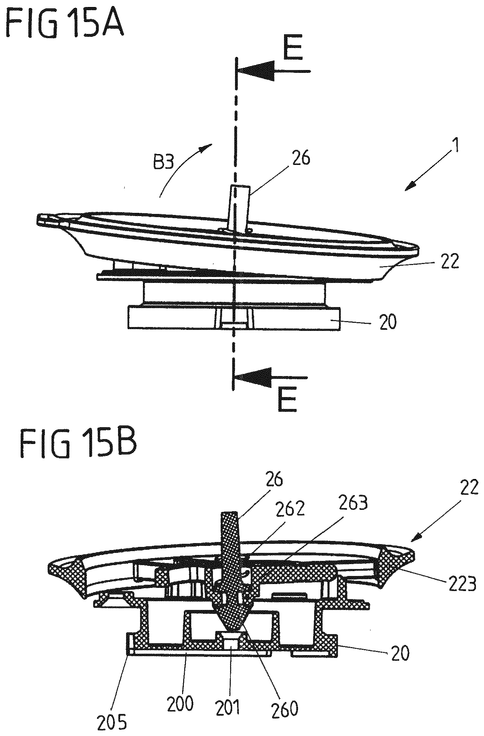

Das Verstellelement 22 kann insbesondere betätigt werden, indem ein Nutzer aus der Richtung der Ansetzbaugruppe 3 auf den Betätigungsabschnitt 223 einwirkt und den Betätigungsabschnitt 223 entlang einer Betätigungsrichtung B1, B2, B3, wie in Fig. 13A, 13B bis 15A, 15B eingezeichnet, zu der Gehäusebaugruppe verstellt. Bei einem solchen Verstellen des Verstellelements 22 wird das Verstellelement 22 zu der Gehäusebaugruppe verkippt, indem sich ein oder zwei der Lagerzapfen 229A, 229B, 229C an den jeweiligen Lagerstelle 209A, 209B, 209C des Gehäuseteils 20 senkrecht zur Ebene des Kreises K am Flansch 202 abstützen und zumindest einer der Lagerzapfen 229A, 229B, 229C senkrecht zur Ebene des Kreises K an der jeweils zugeordneten Lagerstelle 209A, 209B, 209C verstellt wird, unter Abheben von dem Flansch 202 des Gehäuseteils 20, wie dies zum Beispiel aus Fig. 13B für den Lagerzapfen 229B ersichtlich ist.

Erfolgt ein Betätigen des Verstellelements 22 am Betätigungsabschnitt 223 am umfänglichen Ort eines Lagerzapfens 229A, 229B, 229C, so wird das Verstellelement 22 um eine Kippachse K1-K3 verkippt, die durch die anderen beiden Lagerzapfen 229A, 229B, 229C definiert ist. Wird das Verstellelement 22 beispielsweise am umfänglichen Ort des Lagerzapfens 229A betätigt, so verkippt das Verstellelement 22 um eine Kippachse K2 zu dem Gehäuseteil 20, die durch die anderen beiden Lagerzapfen 229A, 229B, 229C definiert ist, indem die Lagerzapfen 229A, 229B, 229C senkrecht zur Ebene des Kreises K am Flansch 202 abgestützt sind und der Lagerzapfen 229A an der Lagerstelle 209A von dem Flansch 202 abgehoben wird.

Eine Betätigung ist hierbei an jedem beliebigen Umfangsort des Betätigungsabschnitts 223 möglich. Ein Verkippen erfolgt dabei nicht notwendigerweise um eine durch zwei Lagerzapfen 229A, 229B, 229C definierte Kippachse K1-K3, sondern kann um jede beliebige Kippachse innerhalb der Ebene des Kreises K erfolgen, beispielsweise auch unter Abstützung des Verstellelements 22 über lediglich einen Lagerzapfen 229A, 229B, 229C am Flansch 202 des Gehäuseteils 20.

Aufgrund der Lagerung kann das Verstellelement 22 nicht nur durch Verkippen betätigt werden, sondern kann beispielsweise auch in eine Betätigungsrichtung B4, wie in Fig. 17 eingezeichnet, senkrecht zur Ebene des Kreises K verschoben und dadurch von dem Gehäuseteil 20 abgehoben werden, um das Ventilelement 26 aus seinem verschließenden Eingriff mit der Strömungsöffnung 201 im Boden 200 des Gehäuseteils 20 zu bringen.

Zudem ist eine Betätigung nicht nur aus Richtung der Ansetzbaugruppe 3 möglich, sondern kann auch in umgekehrter Betätigungsrichtung erfolgen, indem ein Nutzer in eine hin zur Ansetzbaugruppe 3 gerichtete Betätigungsrichtung B5 auf den Betätigungsabschnitt 223 einwirkt, wie dies in Fig. 17 eingezeichnet ist. In diesem Fall verkippt das Verstellelement 22 in einer Kipprichtung B6, unter Abstützung derjenigen Lagerzapfen 229A, 229B, 229C am Flansch 202, die dem Krafteinleitungspunkt zugewandt sind.

Bezugnehmend nunmehr auf Fig. 18 und 19, sind das Verschlussmodul 2 und die Ansetzbaugruppe 3 in verbundener Stellung aneinander angesetzt, indem der an dem Gehäuseteil 20 geformte Boden 200 flächig an der Ansetzfläche 302 des Ansetzteils 30 anliegt. Dadurch, dass das Unterdruckelement 27 das Ansetzteil 30 der Ansetzbaugruppe 3 radial überragt, kommt das Unterdruckelement 27 mit der an der Baugruppe 5 geformten Anlagefläche 50 in Anlage und verformt sich elastisch, unter Herstellung einer Unterdruckwirkung zwischen dem Unterdruckelement 27 und der Anlagefläche 50 insbesondere bei Stoßbelastungen zwischen dem Verschlussmodul 2 und der Baugruppe 5.

Die Ansetzbaugruppe 3 weist einen Formschlussabschnitt 300 in Form einer Nut auf, in die das Verschlussmodul 2 mit einem Formschlussabschnitt 205 am Boden 200 des Gehäuseteils 20 eingesetzt werden kann, um das Verschlussmodul 2 und die Ansetzbaugruppe 3 aneinander zu positionieren und zusätzlich zur Unterdruckwirkung und zur magnetischen Anziehung über die Magnetelemente 21, 31 eine Abstützung insbesondere gegenüber Scherkräften quer zur Ansetzrichtung A bereitzustellen.

Der Formschlussabschnitt 300 in Form der Nut läuft, wie dies aus Fig. 19 ersichtlich ist, umfänglich um die Ansetzrichtung A um.

Zusätzlich weist die Ansetzbaugruppe 3 radial innerhalb des Formschlussabschnitts 300 in Form der Nut einen Eingriffsabschnitt 304 nach Art einer umlaufenden Verzahnung auf, in die ein zugeordneter Eingriffsabschnitt 206 (siehe Fig. 18) an dem Gehäuseteil 20 des Verschlussmoduls 2 in verbundener Stellung eingreift und die eine Drehsicherung des Verschlussmoduls 2 zu der Ansetzbaugruppe 3 um die Ansetzrichtung A bewirkt. Aufgrund des Eingriffs kann das Verschlussmodul 2 nicht leichtgängig, gegebenenfalls aber bei Überwindung einer vorbestimmten Grenzkraft (die durch die Form der Verzahnung und die Magnetkräfte bestimmt ist) zu der Ansetzbaugruppe 3 verdreht werden, wenn das Verschlussmodul 2 in verbundener Stellung an die Ansetzbaugruppe 3 angesetzt ist.

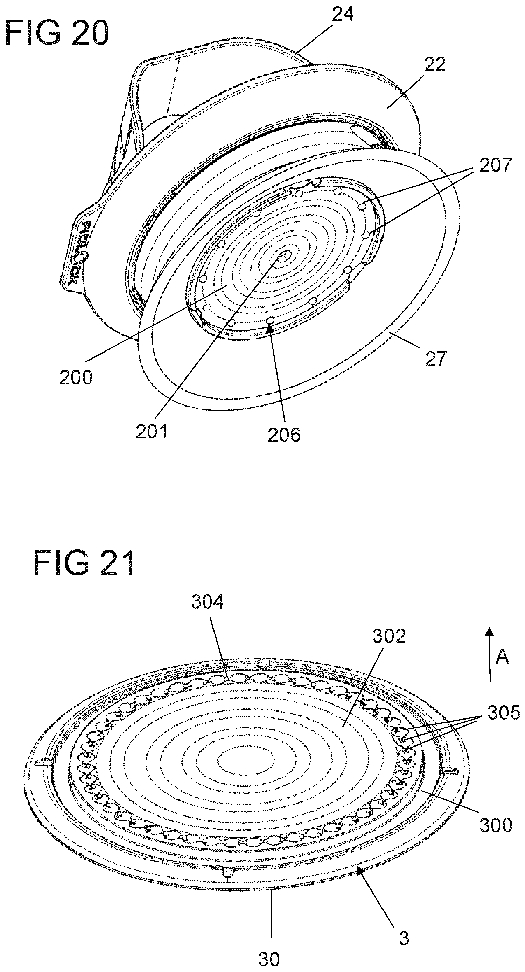

Bezugnehmend auf Fig. 20 und 21, sind in einem Ausführungsbeispiel an dem Boden 200 des Gehäuseteils 20 zur Ausbildung des Eingriffsabschnitts 206 eine Mehrzahl von Eingriffselementen 207 in Form von halbkugelförmigen, balligen Vorsprungselementen geformt. Die Eingriffselemente 207 sind entlang einer Kreislinie aneinander angereiht und regelmäßig zueinander beabstandet. Die Kreislinie erstreckt sich um die zentrale Strömungsöffnung 201 am Boden 200 des Gehäuseteils 20. Die Eingriffselemente 207 in Form der Vorsprungselemente stehen von dem Boden 200 in Richtung der Ansetzbaugruppe 3 vor.

Komplementär zu den Eingriffselementen 207 ist die Eingriffseinrichtung 304 am Ansetzteil 30 der Ansetzbaugruppe 3 durch eine Mehrzahl von Vertiefungen 305 geformt, die jeweils komplementär zu den Eingriffselementen 207 des Eingriffsabschnitts 206 am Verschlussmodul 2 geformt und dazu jeweils eine Halbkugelform aufweisen. Die Vertiefungen 305 sind entlang einer Kreislinie um die Ansetzrichtung A aneinander angereiht und auf dem gleichen Radius wie die Eingriffselemente 207 des Verschlussmoduls 2 angeordnet, sodass die Eingriffselemente 207 bei Ansetzen des Verschlussmoduls 2 und der Ansetzbaugruppe 3 aneinander miteinander in Eingriff gelangen können.

Die Vertiefungen 305 sind an der Ansetzfläche 302 aneinander angereiht und in die Ansetzfläche 302 eingeformt. Die Vertiefungen 305 geben hierbei diskrete Winkelstellungen vor, in die das Verschlussmodul 2 und die Ansetzbaugruppe 3 aneinander angesetzt werden können.

Wie dies aus Fig. 20 und 21 ersichtlich ist, ist die Anzahl der Vertiefungen 305 an der Ansetzbaugruppe 3 größer als die Anzahl der Eingriffselemente 207 an dem Verschlussmodul 2. Die Anzahl der Vertiefungen 305 kann insbesondere durch 4 teilbar sein, was ermöglicht, dass das Verschlussmodul 2 stets in zwei exakt senkrecht zueinanderstehenden Winkelstellungen an die Ansetzbaugruppe 3 angesetzt werden kann, insbesondere in einer Vertikalstellung und einer dazu senkrechten Horizontalstellung.

In verbundener Stellung stehen die Eingriffselemente 207 an dem Verschlussmodul 2 stets in Eingriff mit Vertiefungen 305 an dem Ansetzteil 30 der Ansetzbaugruppe 3.

Die Anzahl der Vertiefungen 305 gibt die diskreten Stellungen des Verschlussmoduls 2 und der Ansetzbaugruppe 3 relativ zueinander vor. Grundsätzlich kann hierbei ein einziges Eingriffselement 207 am Verschlussmodul 2 ausreichend sein, wobei durch mehrere Eingriffselemente 207 die Drehsicherung in verbundener Stellung verbessert werden kann.

Aufgrund der balligen Form der Eingriffselemente 207 und der dazu komplementären Form der Vertiefungen 305 stellen die Eingriffsabschnitte 206, 304 in der verbundenen Stellung eine Drehsicherung zur Sicherung der Drehstellung des Verschlussmoduls 2 und der Ansetzbaugruppe 3 um die Ansetzrichtung A zueinander bereit. Aufgrund der balligen Form können das Verschlussmodul 2 und die Ansetzbaugruppe 3 jedoch bei Überwindung eines Grenzmoments zueinander verdreht werden, unter ratschendem Gleiten der Eingriffselemente 207 über die Vertiefungen 305.

Bei den vorangehend beschriebenen Ausführungsbeispielen ist eine Anlagefläche 50 an der der Ansetzbaugruppe 3 zugeordneten Baugruppe 5 geformt. In der verbundenen Stellung liegt das Unterdruckelement 27 unter elastischer Verformung an der Anlagefläche 50 an, sodass eine Unterdruckwirkung zwischen dem Unterdruckelement 27 und der Anlagefläche 50 an der zugeordneten Baugruppe 5 besteht.

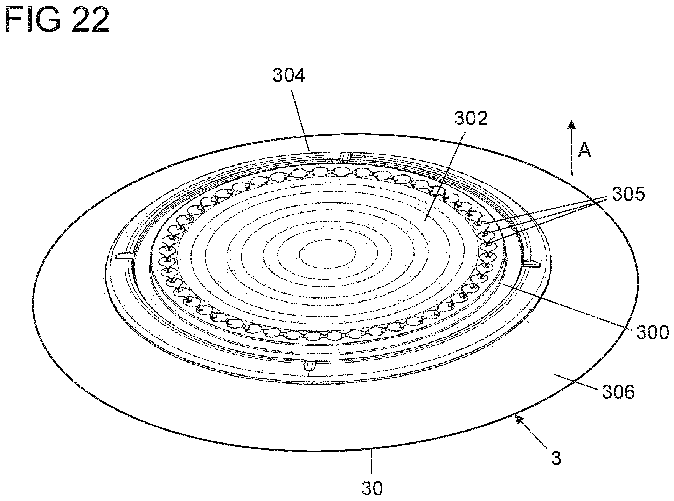

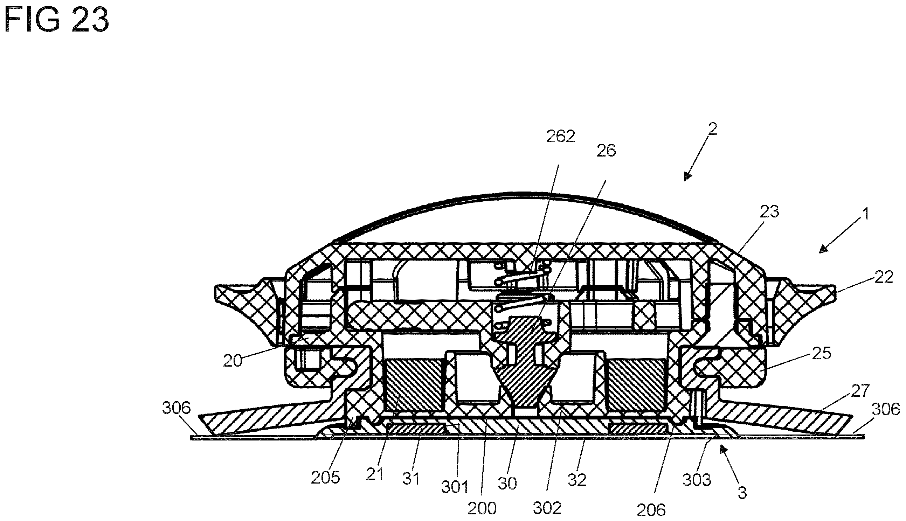

Bei dem in Fig. 22 dargestellten Ausführungsbeispiel einer Ansetzbaugruppe 3 ist demgegenüber an dem Ansetzteil 30 eine einen radial inneren Eingriffsabschnitt 304 umgebende, äußere, umfängliche Anlagefläche 306 geformt, die zur Anlage mit dem Unterdruckelement 27 ausgestaltet ist, wie dies in Fig. 23 dargestellt ist. Die Anlagefläche 306 ist flach und so dimensioniert, dass sie zumindest den gleichen Durchmesser wie das Unterdruckelement 27 (bezogen auf die verformte, verbundene Stellung) oder einen größeren Durchmesser als das Unterdruckelement 27 aufweist. In der verbundenen Stellung ist das Unterdruckelement 27 somit mit der Anlagefläche 306 in Anlage, sodass eine Unterdruckwirkung zwischen dem Unterdruckelement 27 und der Anlagefläche 306 des Ansetzteils 30 besteht.

Die Ausgestaltung des Ansetzteils 30 gemäß Fig. 22 hat den Vorteil, dass eine Unterdruckwirkung des Unterdruckelements 27 unabhängig von der Beschaffenheit der Oberfläche der Baugruppe 5 ist. Die Oberfläche der Anlagefläche 306 am Ansetzteil 30 kann für eine Anlage und Unterdruckwirkung mit dem Unterdruckelement 27 optimiert sein.

Abgesehen von der Anlagefläche 306 ist das Ansetzteil 30 gemäß Fig. 22 identisch dem Ansetzteil gemäß Fig. 19 und 21, sodass auch auf die Erläuterungen hierzu verwiesen wird.

Der der Erfindung zugrunde liegende Gedanke ist nicht auf die vorangehend geschilderten Ausführungsbeispiele beschränkt, sondern lässt sich grundsätzlich auch in gänzlich andersgearteter Weise verwirklichen, solange dies unter den Wortlaut der beigefügten Ansprüche fällt.

Eine Verbindungsvorrichtung der hier beschriebenen Art kann zum Befestigen ganz unterschiedlicher Baugruppen aneinander dienen. Insbesondere ist die Verbindungsvorrichtung in ihrer Verwendung nicht auf die hier gezeigten Beispiele beschränkt. Vorteilhaft kann die Verbindungsvorrichtung zum Befestigen elektronischer Geräte, zum Beispiel einer Kamera oder eines Mobiltelefons, verwendet werden. Dies ist jedoch nicht beschränkend.

### Bezugszeichenliste

- 1: Verbindungsvorrichtung
- 2: Verschlussmodul
- 20: Gehäuseteil
- 200: Boden
- 201: Strömungsöffnung
- 202: Flansch
- 203: Aufnahmeraum
- 205: Formschlussabschnitt
- 206: Eingriffsabschnitt
- 207: Eingriffselemente
- 209A-C: Lagerstelle
- 21: Magnetelement
- 22: Verstellelement
- 222: Aufnahmeöffnung
- 223: Betätigungsabschnitt
- 226: Stege
- 229A-C: Lagerzapfen
- 23: Gehäuseteil
- 235: Ausnehmungen
- 24: Befestigungsbügel
- 25: Befestigungsring (Spannring)
- 26: Ventilelement
- 260: Ventilkopf
- 262: Federelement
- 263: Kopplungsabschnitt
- 27: Unterdruckelement (Napfelement)
- 270: Bund
- 271: Öffnung
- 272: Flexibler Randabschnitt
- 3: Ansetzbaugruppe
- 30: Ansetzteil
- 300: Formschlussabschnitt
- 301: Aufnahmeöffnung
- 302: Ansetzfläche
- 303: Vertiefung
- 304: Eingriffsabschnitt
- 305: Vertiefungen
- 306: Anlagefläche
- 31: Magnetelement
- 32: Klebeeinrichtung
- 4: Baugruppe
- 5: Baugruppe
- 50: Anlagefläche
- A: Ansetzrichtung
- B1-B6: Betätigungsrichtung
- K: Kreis
- K1-K3: Kippachse
- R1, R2: Radius

## Patentansprüche

1. Verbindungsvorrichtung (1) zum lösbaren Verbinden zweier Baugruppen (4, 5), mit
einem Verschlussmodul (2), das einer ersten der Baugruppen (4, 5) zugeordnet ist und eine Gehäusebaugruppe, ein an der Gehäusebaugruppe verstellbar angeordnetes Verstellelement (22) und ein Unterdruckelement (27) aufweist, und
einer Ansetzbaugruppe (3), die einer zweiten der Baugruppen (4, 5) zugeordnet ist und ein Ansetzteil (30) aufweist, wobei das Verschlussmodul (2) und das Ansetzteil (30) der Ansetzbaugruppe (3) entlang einer Ansetzrichtung (A) aneinander ansetzbar sind, sodass in einer verbundenen Stellung bei Belastung der ersten und zweiten der Baugruppen (4, 5) zueinander das Verschlussmodul (2) aufgrund einer durch das Unterdruckelement (27) bewirkten Unterdruckwirkung an der zweiten der Baugruppen (4, 5) gehalten ist,
wobei das Verschlussmodul (2) ein erstes Magnetelement (21) und die Ansetzbaugruppe (3) ein zweites Magnetelement (31) aufweisen, wobei das erste Magnetelement (21) und das zweite Magnetelement (31) sich in der verbundenen Stellung magnetisch anziehend gegenüberstehen,
wobei das Verstellelement (22) zum Aufheben der Unterdruckwirkung des Unterdruckelements (27) zu der Gehäusebaugruppe bewegbar ist, um eine Strömungsöffnung (201) in der Gehäusebaugruppe für einen Zustrom von Luft in einen Raum (B) zwischen dem Unterdruckelement (27) und der zweiten der Baugruppen (4, 5) freizugeben,
**dadurch gekennzeichnet, dass** das Ansetzteil (30) der Ansetzbaugruppe (3) zum Verkleben mit der zweiten der Baugruppen (4, 5) ausgebildet ist,
wobei die Ansetzbaugruppe (3) eine Klebeeinrichtung (32) zum Herstellen einer Klebeverbindung mit der zweiten der Baugruppen (4, 5) aufweist,
wobei das zweite Magnetelement (31) in einer Aufnahmeöffnung (301) des Ansetzteils (30) aufgenommen ist, wobei die Klebeeinrichtung (32) die Aufnahmeöffnung (301) überdeckt und nach außen hin verschließt.

2. Verbindungsvorrichtung (1) nach Anspruch 1, **dadurch gekennzeichnet, dass** die Klebeeinrichtung (32) eine Klebeschicht bestehend aus einem Klebstoff für polare oder eine Klebeschicht bestehend aus einem Klebstoff für unpolare Oberflächen ist.

3. Verbindungsvorrichtung (1) nach Anspruch 1 oder 2, **dadurch gekennzeichnet, dass** die Klebeeinrichtung (32) ein Klebepad ist, das über eine erste Klebefläche mit dem Ansetzteil (30) verklebt ist und über eine zweite Klebefläche mit der zweiten der Baugruppen (4, 5) verklebbar ist.

4. Verbindungsvorrichtung (1) nach einem der Ansprüche 1 bis 3, **dadurch gekennzeichnet, dass** die Klebeeinrichtung (32) an einer dem Verschlussmodul (2) abgewandten Seite des Ansetzteils (30) angeordnet ist.

5. Verbindungsvorrichtung (1) nach einem der vorangehenden Ansprüche, **dadurch gekennzeichnet, dass** die Gehäusebaugruppe des Verschlussmoduls (2) einen ersten Formschlussabschnitt (205) und das Ansetzteil (30) der Ansetzbaugruppe (3) einen zweiten Formschlussabschnitt (300) aufweisen, wobei der erste Formschlussabschnitt (205) und der zweite Formschlussabschnitt (300) bei Ansetzen des Verschlussmoduls (2) und der Ansetzbaugruppe (3) aneinander zum Sperren einer Querbewegung zwischen dem Verschlussmodul (2) und der Ansetzbaugruppe (3) in Eingriff miteinander gelangen, insbesondere wobei einer des ersten Formschlussabschnitts (205) und des zweiten Formschlussabschnitts (300) als um die Ansetzrichtung (A) umlaufender Steg und der andere des ersten Formschlussabschnitts (205) und des zweiten Formschlussabschnitts (300) als um die Ansetzrichtung (A) umlaufende Nut ausgebildet sind.

6. Verbindungsvorrichtung (1) nach einem der vorangehenden Ansprüche, **dadurch gekennzeichnet, dass** die Gehäusebaugruppe des Verschlussmoduls (2) einen ersten Eingriffsabschnitt (206) und das Ansetzteil (30) der Ansetzbaugruppe (3) einen zweiten Eingriffsabschnitt (304) aufweisen, wobei der erste Eingriffsabschnitt (206) und der zweite Eingriffsabschnitt (304) bei Ansetzen des Verschlussmoduls (2) und der Ansetzbaugruppe (3) aneinander zum Sperren einer Rotationsbewegung zwischen dem Verschlussmodul (2) und der Ansetzbaugruppe (3) in Eingriff miteinander gelangen.

7. Verbindungsvorrichtung (1) nach Anspruch 6, **dadurch gekennzeichnet, dass** einer des ersten Eingriffsabschnitts (206) und des zweiten Eingriffsabschnitts (304) eine Mehrzahl von Vertiefungen (305) und der andere des ersten Eingriffsabschnitts (206) und des zweiten Eingriffsabschnitts (304) zumindest ein Eingriffselement (207) zum Eingreifen in die Vertiefungen (305) aufweisen, insbesondere wobei das zumindest eine Eingriffselement (207) ballig geformt ist und die Vertiefungen (305) eine zu dem zumindest einen Eingriffselement (207) komplementäre Form aufweisen und/oder wobei die Vertiefungen (305) entlang einer Kreislinie um die Ansetzrichtung (A) aneinander angereiht sind und/oder wobei die Anzahl die Vertiefungen (305) durch 4 teilbar ist und/oder wobei die Anzahl der Vertiefungen (305) größer ist als die Anzahl der Eingriffselemente (207).

8. Verbindungsvorrichtung (1) nach einem der vorangehenden Ansprüche, **dadurch gekennzeichnet, dass** das Verstellelement (22) um unterschiedliche Raumrichtungen zu der Gehäusebaugruppe verkippbar ist, um die Strömungsöffnung (201) in der Gehäusebaugruppe freizugeben.

9. Verbindungsvorrichtung (1) nach einem der vorangehenden Ansprüche, **dadurch gekennzeichnet, dass** das Unterdruckelement (27) durch ein zumindest abschnittsweise elastisches Napfelement ausgebildet ist.

10. Verbindungsvorrichtung (1) nach einem der vorangehenden Ansprüche, **dadurch gekennzeichnet, dass** die Gehäusebaugruppe zumindest eine Lagerstelle (209A-209C) zur Lagerung des Verstellelements (22) aufweist, insbesondere wobei das Verstellelement (22) zumindest einen Lagerzapfen (229A-229C) aufweist, der in der zumindest einen Lagerstelle (209A-209C) aufgenommen ist, wobei der zumindest eine Lagerzapfen (229A-229C) um eine erste Kippachse (K1) und eine zweite Kippachse (K2) in der zumindest einen Lagerstelle (209A-209C) verkippbar ist.

11. Verbindungsvorrichtung (1) nach einem der vorangehenden Ansprüche, **dadurch gekennzeichnet, dass** die Strömungsöffnung (201) in einem Boden (200) der Gehäusebaugruppe gebildet ist, der in der verbundenen Stellung der Ansetzbaugruppe (3) zugewandt ist.

12. Verbindungsvorrichtung (1) nach einem der vorangehenden Ansprüche, **dadurch gekennzeichnet, dass** das Verschlussmodul (2) ein Ventilelement (26) aufweist, das an dem Verstellelement (22) angeordnet und durch Verstellen des Verstellelements (22) betätigbar ist.

13. Verbindungsvorrichtung (1) nach einem der vorangehenden Ansprüche, **dadurch gekennzeichnet, dass** das Ansetzteil (30) eine Anlagefläche (306) aufweist, an der das Unterdruckelement (27) in der verbundenen Stellung zum Bewirken der Unterdruckwirkung anliegt.

14. Elektronisches Gerät, insbesondere Mobiltelefon, mit einer Verbindungsvorrichtung (1) nach einem der vorangehenden Ansprüche, wobei das elektronische Gerät die zweite der Baugruppen (4, 5) ausbildet und die Ansetzbaugruppe (3) an dem elektronischen Gerät angebracht ist.

15. Elektronisches Gerät nach Anspruch 14, **dadurch gekennzeichnet, dass** das Unterdruckelement (27) in der verbundenen Stellung an einer von der Ansetzbaugruppe (3) unterschiedlichen Anlagefläche (50) des elektronischen Geräts zum Bewirken der Unterdruckwirkung anliegt.

## Claims

1. A connecting device (1) for detachably connecting two assemblies (4, 5), comprising
a closure module (2), which is associated to a first one of the assemblies (4, 5) and includes a housing assembly, an adjustment element (22) adjustably arranged on the housing assembly, and a vacuum element (27), and
an add-on assembly (3), which is associated to a second one of the assemblies (4, 5) and includes an add-on part (30), wherein the closure module (2) and the add-on part (30) of the add-on assembly (3) can be attached to each other along an add-on direction (A), so that in a connected position, when the first one and second one of the assemblies (4, 5) are loaded relative to each other, the closure module (2) is held at the second one of the assemblies (4, 5) due to a vacuum effect caused by the vacuum element (27),
wherein the closure module (2) includes a first magnetic element (21) and the add-on assembly (3) includes a second magnetic element (31), wherein in the connected position the first magnetic element (21) and the second magnetic element (31) face each other in a magnetically attracting manner,
wherein the adjustment element (22) can be moved towards the housing assembly to eliminate the vacuum effect of the vacuum element (27), in order to clear a flow opening (201) in the housing assembly for an inflow of air into a space (B) between the vacuum element (27) and the second one of the assemblies (4, 5),
**characterized in that** the add-on part (30) of the add-on assembly (3) is configured for bonding with the second one of the assemblies (4, 5),
wherein the add-on assembly (3) includes an adhesive means (32) for producing an adhesive connection with the second one of the assemblies (4, 5),
wherein the second magnetic element (31) is received in a receiving opening (301) of the add-on part (30), wherein the adhesive means (32) covers the receiving opening (301) and closes the same towards the outside.

2. The connecting device (1) according to claim 1, **characterized in that** the adhesive means (32) is an adhesive layer consisting of an adhesive for polar surfaces or an adhesive layer consisting of an adhesive for non-polar surfaces.

3. The connecting device (1) according to claim 1 or 2, **characterized in that** the adhesive means (32) is an adhesive pad which is bonded to the add-on part (30) via a first adhesive surface and can be bonded to the second one of the assemblies (4, 5) via a second adhesive surface.

4. The connecting device (1) according to any of claims 1 to 3, **characterized in that** the adhesive means (32) is arranged on a side of the add-on part (30) facing away from the closure module (2).

5. The connecting device (1) according to any of the preceding claims, **characterized in that** the housing assembly of the closure module (2) includes a first form-fitting portion (205) and the add-on part (30) of the add-on assembly (3) includes a second form-fitting portion (300), wherein on attachment of the closure module (2) and the add-on assembly (3) to each other for blocking a transverse movement between the closure module (2) and the add-on assembly (3) the first form-fitting portion (205) and the second form-fitting portion (300) get into engagement with each other, in particular wherein one of the first form-fitting portion (205) and the second form-fitting portion (300) is configured as a web extending around the add-on direction (A) and the other one of the first form-fitting portion (205) and the second form-fitting portion (300) is configured as a groove extending around the add-on direction (A).

6. The connecting device (1) according to any of the preceding claims, **characterized in that** the housing assembly of the closure module (2) includes a first engaging portion (206) and the add-on part (30) of the add-on assembly (3) includes a second engaging portion (304), wherein on attachment of the closure module (2) and the add-on assembly (3) to each other the first engaging portion (206) and the second engaging portion (304) get into engagement with each other for blocking a rotational movement between the closure module (2) and the add-on assembly (3).

7. The connecting device (1) according to claim 6, **characterized in that** one of the first engaging portion (206) and the second engaging portion (304) includes a plurality of depressions (305) and the other one of the first enes ggaging portion (206) and the second engaging portion (304) includes at least one engaging element (207) for engaging into the depressions (305), in particular wherein the at least one engaging element (207) is of bulbous shape and the depressions (305) have a shape complementary to the at least one engaging element (207) and/or wherein the depressions (305) are mounted side by side along a circular line around the add-on direction (A) and/or wherein the number of depressions (305) can be divided by 4 and/or wherein the number of depressions (305) is greater than the number of engaging elements (207).

8. The connecting device (1) according to any of the preceding claims, **characterized in that** the adjustment element (22) can be tilted towards the housing assembly around different spatial directions in order to clear the flow opening (201) in the housing assembly.

9. The connecting device (1) according to any of the preceding claims, **characterized in that** the vacuum element (27) is formed by an at least sectionally elastic cup element.

10. The connecting device (1) according to any of the preceding claims, **characterized in that** the housing assembly includes at least one bearing point (209A-209C) for supporting the adjustment element (22), in particular wherein the adjustment element (22) includes at least one bearing pin (229A-229C) which is received in the at least one bearing point (209A-209C), wherein the at least one bearing pin (229A-229C) can be tilted about a first tilting axis (K1) and a second tilting axis (K2) in the at least one bearing point (209A-209C).

11. The connecting device (1) according to any of the preceding claims, **characterized in that** the flow opening (201) is formed in a floor (200) of the housing assembly, which in the connected position faces the add-on assembly (3).

12. The connecting device (1) according to any of the preceding claims, **characterized in that** the closure module (2) includes a valve element (26) which is arranged on the adjustment element (22) and can be actuated by adjusting the adjustment element (22).

13. The connecting device (1) according to any of the preceding claims, **characterized in that** the add-on part (30) includes an abutment surface (306) against which the vacuum element (27) rests in the connected position for causing the vacuum effect.

14. An electronic device, in particular a mobile phone, comprising a connecting device (1) according to any of the preceding claims, wherein the electronic device forms the second one of the assemblies (4, 5) and the add-on assembly (3) is mounted on the electronic device.

15. The electronic device according to claim 14, **characterized in that** in the connected position the vacuum element (27) rests against an abutment surface (50) of the electronic device different from the add-on assembly (3) for causing the vacuum effect.

## Revendications

1. Dispositif de raccordement (1) pour relier de manière amovible deux ensembles (4, 5), comprenant
un module de fermeture (2) qui est associé à un premier des ensembles (4, 5) et qui présente un ensemble de boîtier, un élément de réglage (22) agencé de manière réglable sur l'ensemble de boîtier et un élément de vide (27), et
un ensemble de rattachement (3) qui est associé à un deuxième desdits ensembles (4, 5) et qui présente une partie de rattachement (30), le module de fermeture (2) et la partie de rattachement (30) de l'ensemble de rattachement (3) pouvant être rattachés l'un à l'autre le long d'une direction de rattachement (A), de sorte que dans une position connectée, lorsque les premier et deuxième desdits ensembles (4, 5) sont chargés l'un par rapport à l'autre, le module de fermeture (2) est maintenu sur le deuxième desdits ensembles (4, 5) en raison d'un effet de vide réalisé par l'élément de vide (27),
dans lequel le module de fermeture (2) présente un premier élément magnétique (21) et l'ensemble de rattachement (3) présente un deuxième élément magnétique (31), le premier élément magnétique (21) et le deuxième élément magnétique (31) se faisant face par attraction magnétique dans la position connectée,
dans lequel l'élément de réglage (22) peut être déplacé vers l'ensemble de boîtier pour éliminer l'effet de vide de l'élément de vide (27) afin de libérer une ouverture d'écoulement (201) dans l'ensemble de boîtier pour une entrée d'air dans un espace (B) entre l'élément de vide (27) et le deuxième des ensembles (4, 5),
**caractérisé en ce que** la partie de rattachement (30) de l'ensemble de rattachement (3) est conçue pour être collée sur le deuxième des ensembles (4, 5),
dans lequel l'ensemble de rattachement (3) présente un dispositif de collage (32) pour réaliser une liaison adhésive avec le deuxième des ensembles (4, 5),
le deuxième élément magnétique (31) étant reçu dans une ouverture de réception (301) de la partie de rattachement (30), le dispositif de collage (32) recouvrant l'ouverture de réception (301) et la fermant vers l'extérieur.

2. Dispositif de raccordement (1) selon la revendication 1, **caractérisé en ce que** le dispositif de collage (32) est une couche adhésive constituée d'un adhésif pour surfaces polaires ou une couche adhésive constituée d'un adhésif pour surfaces non polaires.

3. Dispositif de raccordement (1) selon la revendication 1 ou 2, **caractérisé en ce que** le dispositif de collage (32) est un tampon adhésif qui est collé à la partie de rattachement (30) par une première surface adhésive et qui peut être collé au deuxième des ensembles (4, 5) par une deuxième surface adhésive.

4. Dispositif de raccordement (1) selon l'une quelconque des revendications 1 à 3, **caractérisé en ce que** le dispositif de collage (32) est agencé sur un côté de la partie de rattachement (30) opposé au module de fermeture (2).

5. Dispositif de raccordement (1) selon l'une quelconque des revendications précédentes, **caractérisé en ce que** l'ensemble de boîtier du module de fermeture (2) présente une première section de liaison de forme (205) et la partie de rattachement (30) de l'ensemble de rattachement (3) présente une deuxième section de liaison de forme (300), dans lequel, lorsque le module de fermeture (2) et l'ensemble de rattachement (3) sont rattachés l'un à l'autre, la première section de liaison de forme (205) et la deuxième section de liaison de forme (300) viennent en prise l'une avec l'autre pour bloquer un mouvement transversal entre le module de fermeture (2) et l'ensemble de rattachement (3), en particulier dans lequel l'une de la première section de liaison de forme (205) et de la deuxième section de liaison de forme (300) est réalisée sous la forme d'une nervure s'étendant autour de la direction de rattachement (A) et l'autre de la première section de liaison de forme (205) et de la deuxième section de liaison de forme (300) est réalisée sous la forme d'une rainure s'étendant autour de la direction de rattachement (A).

6. Dispositif de raccordement (1) selon l'une quelconque des revendications précédentes, **caractérisé en ce que** l'ensemble de boîtier du module de fermeture (2) présente une première partie d'engagement (206) et la partie de rattachement (30) de l'ensemble de rattachement (3) présente une deuxième partie d'engagement (304), dans lequel la première partie d'engagement (206) et la deuxième partie d'engagement (304) viennent en prise l'une avec l'autre lors du rattachement du module de fermeture (2) et de l'ensemble de rattachement (3) pour bloquer un mouvement de rotation entre le module de fermeture (2) et l'ensemble de rattachement (3).

7. Dispositif de raccordement (1) selon la revendication 6, **caractérisé en ce que** l'une de la première partie d'engagement (206) et de la deuxième partie d'engagement (304) présente une pluralité de cavités (305) et l'autre de la première partie d'engagement (206) et de la deuxième partie d'engagement (304) comprend au moins un élément d'engagement (207) pour s'engager dans les cavités (305), en particulier dans lequel l'au moins un élément d'engagement (207) est de forme bombée et les cavités (305) présentent une forme complémentaire à l'au moins un élément d'engagement (207) et/ou dans lequel les cavités (305) sont alignés les uns à côté des autres le long d'une ligne circulaire autour de la direction de rattachement (A) et/ou dans lequel le nombre des cavités (305) est divisible par 4 et/ou dans lequel le nombre des cavités (305) est supérieur au nombre des éléments d'engagement (207).

8. Dispositif de raccordement (1) selon l'une quelconque des revendications précédentes, **caractérisé en ce que** l'élément de réglage (22) peut être basculé autour différentes directions spatiales par rapport à l'ensemble de boîtier afin de libérer l'ouverture d'écoulement (201) dans l'ensemble de boîtier.

9. Dispositif de raccordement (1) selon l'une quelconque des revendications précédentes, **caractérisé en ce que** l'élément de vide (27) est formé par un élément de coupelle élastique au moins par sections.

10. Dispositif de raccordement (1) selon l'une quelconque des revendications précédentes, **caractérisé en ce que** l'ensemble de boîtier présente au moins un point d'appui (209A-209C) pour supporter l'élément de réglage (22), en particulier dans lequel l'élément de réglage (22) présente au moins un tourillon (229A-229C) qui est reçu dans l'au moins un point d'appui (209A-209C), l'au moins un tourillon (229A-229C) pouvant être basculé autour d'un premier axe de basculement (K1) et d'un deuxième axe de basculement (K2) dans l'au moins un point d'appui (209A-209C).

11. Dispositif de raccordement (1) selon l'une quelconque des revendications précédentes, **caractérisé en ce que** l'ouverture d'écoulement (201) est formée dans un fond (200) de l'ensemble de boîtier qui, dans la position connectée, fait face à l'ensemble de rattachement (3).

12. Dispositif de raccordement (1) selon l'une quelconque des revendications précédentes, **caractérisé en ce que** le module de fermeture (2) comprend un élément de soupape (26) qui est agencé sur l'élément de réglage (22) et peut être actionné en réglant l'élément de réglage (22).

13. Dispositif de raccordement (1) selon l'une quelconque des revendications précédentes, **caractérisé en ce que** la partie de rattachement (30) présente une surface d'appui (306) contre laquelle l'élément de vide (27) vient en appui dans la position connectée pour réaliser l'effet de vide.

14. Appareil électronique, en particulier téléphone mobile, comprenant un dispositif de raccordement (1) selon l'une quelconque des revendications précédentes, dans lequel l'appareil électronique constitue le deuxième des ensembles (4, 5) et l'ensemble de rattachement (3) est monté sur l'appareil électronique.

15. Appareil électronique selon la revendication 14, **caractérisé en ce que** l'élément de vide (27), en position connectée, est en appui sur une surface d'appui (50) de l'appareil électronique, différente de l'ensemble de rattachement (3), pour réaliser l'effet de vide.
